(19) Europäisches Patentamt
European Patent Office
Office européen des brevets

(11) **EP 2 909 778 B1**

(12) **EUROPÄISCHE PATENTSCHRIFT**

(45) Veröffentlichungstag und Bekanntmachung des Hinweises auf die Patenterteilung:
**03.05.2017 Patentblatt 2017/18**

(21) Anmeldenummer: **13774422.3**

(22) Anmeldetag: **09.10.2013**

(51) Int Cl.:
***G06F 21/34*** *(2013.01)*

(86) Internationale Anmeldenummer:
**PCT/EP2013/071059**

(87) Internationale Veröffentlichungsnummer:
**WO 2014/060265 (24.04.2014 Gazette 2014/17)**

(54) **VERFAHREN ZUR AUTHENTIFIZIERUNG MIT EINEM TOKEN**

METHOD FOR AUTHENTICATION BY MEANS OF A TOKEN

PROCÉDÉ D'AUTHENTIFICATION À L'AIDE D'UN JETON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.10.2012 DE 102012218943**

(43) Veröffentlichungstag der Anmeldung:
**26.08.2015 Patentblatt 2015/35**

(73) Patentinhaber: **Bundesdruckerei GmbH**
**10969 Berlin (DE)**

(72) Erfinder:
• **BASTIAN, Paul**
**10243 Berlin (DE)**
• **DIETRICH, Frank**
**12437 Berlin (DE)**
• **KRAUS, Micha**
**10827 Berlin (DE)**
• **MORGNER, Frank**
**12055 Berlin (DE)**
• **SCHRÖDER, Martin**
**12437 Berlin (DE)**

(74) Vertreter: **Richardt Patentanwälte PartG mbB**
**Wilhelmstraße 7**
**65185 Wiesbaden (DE)**

(56) Entgegenhaltungen:
EP-A1- 1 862 948     EP-A1- 2 003 625
EP-A2- 2 282 281     WO-A1-2010/043974
DE-A1-102009 027 686     US-A1- 2005 015 588

**Beschreibung**

Die Erfindung betrifft ein Verfahren zur Initialisierung, insbesondere Resynchronisation, von Datenbankmitteln eines Dienst-Computersystems, insbesondere für die Erzeugung eines One-Time-Password (OTP), einen Sicherheitstoken sowie ein Computersystem.

Aus dem Stand der Technik sind Sicherheitstoken bekannt, die über eine gemeinsame Zeitbasis mit einem Authentisierungsserver verfügen, um synchron zu dem Authentisierungsserver ständig wechselnde Passwörter zu generieren. Ein Nachteil solcher Sicherheitstoken ist, dass diese eine Batterie benötigen, um die gemeinsame Zeitbasis mit dem Authentisierungsserver zur Verfügung zu stellen.

Demgegenüber liegt der Erfindung die Aufgabe zugrunde, ein verbessertes Verfahren zur Initialisierung von Datenbankmitteln sowie ein Computersystem zu schaffen, welche für die Erzeugung eines OTPs dienen.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben.

Unter einem "One-Time-Password" oder "OTP" wird hier ein Einmal-Passwort oder ein Einmal-Kennwort verstanden, welches nur für eine einmalige Verwendung gültig sein soll. Entsprechend erfordert jede Authentisierung ein neues OTP.

Unter einem "Sicherheitstoken" oder "Security Token" wird hier eine Vorrichtung verstanden, die an autorisierte Nutzer für die Zwecke der Authentisierung herausgegeben werden. Solche Sicherheitstoken werden auch als Hardwaretoken, Authentication Token oder Cryptographic Token bezeichnet.

Insbesondere kann es sich bei einem erfindungsgemäßen Sicherheitstoken um einen USB-Stick, eine Chipkarte oder ein Wert- oder Sicherheitsdokument handeln.

Unter einem "Wert- oder Sicherheitsdokument" wird dabei insbesondere ein Ausweisdokument, das heißt ein ID-Dokument, insbesondere ein elektronischen Personalausweis, Reisepass, Führerschein, Firmenausweis oder ein Zahlungsmittel, wie zum Beispiel eine Banknote, eine Kreditkarte oder einen sonstigen Berechtigungsnachweis, wie zum Beispiel eine Eintrittskarte, einen Frachtbrief oder ein Visum, insbesondere eine Chipkarte, insbesondere mit RFID- und/oder NFC-Schnittstelle, verstanden.

Vorzugsweise hat der Sicherheitstoken eine drahtlose Schnittstelle zur Einkopplung elektrischer Energie von einem Terminal, wobei die drahtlose Schnittstelle gleichzeitig auch zur Kommunikation mit dem Terminal dienen kann, wie zum Beispiel nach einem NFC- und/oder RFID-Verfahren. Der Sicherheitstoken wird also nur so lange mit elektrischer Energie versorgt, wie er sich in der Reichweite des Terminals befindet.

Unter einem "Terminal" wird hier ein elektronisches Gerät verstanden, welches eine Schnittstelle zur Einkopplung von elektrischer Energie in den Sicherheitstoken aufweist sowie zum Senden eines Kommandos zur Erzeugung des OTP an das Sicherheitstoken, wie zum Beispiel ein Chipkartenterminal, ein NFC- oder RFID-Lesegerät oder ein mobiles Telekommunikationsgerät, wie zum Beispiel ein sogenanntes Smartphone mit integrierter NFC- und/oder RFID-Schnittstelle.

Nach Ausführungsformen der Erfindung wird zur Authentisierung eines Nutzers gegenüber einem Authentisierungsserver wie folgt vorgegangen:

Zunächst bringt der Nutzer den Sicherheitstoken in die Reichweite des Terminals, das heißt zum Beispiel eines Smartphones des Nutzers, welches eine NFC-Schnittstelle aufweist. Durch die von dem Terminal abgestrahlte Trägerwelle wird elektrische Energie in den Sicherheitstoken eingekoppelt, sodass dieser hierdurch aktiviert wird. Beispielsweise beginnt hierdurch ein Oszillator des Sicherheitstokens zu schwingen, sodass der Prozessor des Sicherheitstokens getaktet wird und die Ausführung eines Programms des Sicherheitstokens starten kann.

Der Benutzer kann beispielsweise in ein Anwendungsprogramm des Terminals eingeben, dass von dem Sicherheitstoken ein OTP generiert werden soll, um dem Nutzer die Authentisierung gegenüber einem Authentisierungsserver zu ermöglichen. Das Anwendungsprogramm des Terminals generiert daraufhin eine entsprechende Anforderung für ein OTP, welche als Kommando von dem Terminal an den Sicherheitstoken gesendet wird, wie zum Beispiel als sogenannte Kommando-APDU oder in Form von mehreren APDUs.

Aufgrund des Empfangs des Kommandos von dem Terminal erzeugt der Sicherheitstoken ein OTP durch kryptografische Ableitung, wobei in diese kryptografische Ableitung erste und zweite Daten eingehen, die in einem elektronischen Speicher des Sicherheitstokens gespeichert sind, und zwar in Speicherbereichen, auf die nur der Prozessor des Tokens einen Speicherzugriff durchführen kann. Beispielsweise geben die ersten Daten einen aktuellen Zustand an, wohingegen die zweiten Daten ein unveränderliches Geheimnis sein können.

Das so abgeleitete OTP wird dann auf eine Anzeigevorrichtung, das heißt einem Display, des Sicherheitstokens angezeigt, sodass es der Nutzer von dem Display ablesen kann.

Ferner werden durch den Sicherheitstoken aktualisierte erste Daten ermittelt, und zwar mithilfe einer Funktion. Bei dieser Funktion kann es sich zum Beispiel um einen Zähler oder einen deterministischen Zufallszahlengenerator zur Erzeugung von Pseudozufallszahlen handeln.

Die in dem elektronischen Speicher gespeicherten ersten Daten werden dann durch die aktualisierten ersten Daten überschrieben, wobei die zweiten Daten unverändert bleiben.

Zwischen einem Nutzer-Computersystem und einem Authentisierungsserver wird nun eine Netzwerkverbindung hergestellt.

Unter einem "Nutzer-Computersystem" wird dabei ein Computersystem, wie zum Beispiel ein PC, verstanden, der sich nutzerseitig befindet. Die Netzwerkverbindung zu dem Authentisierungsserver kann über ein öffentliches Netzwerk, wie zum Beispiel das Internet, aufgebaut werden.

Unter einem "Authentisierungsserver" wird hier ein Computer verstanden, der zur Authentisierung des Nutzers dient, um im Falle einer erfolgreichen Authentisierung ein Authentisierungssignal zu generieren, welches dem Nutzer zum Beispiel die Inanspruchnahme eines Dienstes ermöglicht.

Zur Herstellung der Netzwerkverbindung gibt der Nutzer beispielsweise eine URL in den Internetbrowser seines Nutzer-Computersystems ein. In die hierdurch aufgerufene Webseite gibt der Nutzer dann in den Internet-Browser seines Nutzer-Computersystems das auf der Anzeigevorrichtung des Sicherheitstokens angezeigte OTP sowie einen Identifikator ein.

Unter einem "Identifikator" wird hier eine Information verstanden, die den Nutzer und/oder den Sicherheitstoken eindeutig identifiziert, wie zum Beispiel eine Username-Passwort-Kombination, eine E-Mail-Adresse des Nutzers und/oder eine Kennung des Sicherheitstokens selbst, wie zum Beispiel eine Kartennummer oder ein Pseudonym, beispielsweise die sog. "RID".

Der elektronische Personalausweis der Bundesrepublik Deutschland (ePA) hat eine Pseudonym-Funktion, die auch als "Restricted Identifier" (RID) bezeichnet wird. Diese Pseudonym-Funktion ermöglicht ein anonymes Login auf Websites. Der ePA erzeugt eine pseudonyme Kartenkennung und übermittelt diese an die Website. Bei jedem weiteren Aufruf der Website wird die gleiche Kartenkennung übermittelt, sodass der Ausweisinhaber "wiedererkannt" wird. Eine Weiterbildung dieser Pseudonym-Funktion ist in DE 10 2012 201 209.5 offenbart, deren Offenbarungsgehalte vollumfänglich hiermit zum Offenbarungsgehalt der vorliegenden Patentanmeldung gemacht wird.

Der Identifikator und das OTP werden über die Netzwerkverbindung von dem Nutzer-Computersystem an den Authentisierungsserver übertragen. Der Authentisierungsserver greift daraufhin auf eine Datenbank zu, um mithilfe des Identifikators eine Version der ersten und zweiten Daten aus der Datenbank auszulesen.

Der Authentisierungsserver führt dann dieselbe kryptografische Ableitung durch, die zuvor der Sicherheitstoken mithilfe der ersten und zweiten Daten durchgeführt hat. Wenn die aus der Datenbank ausgelesene Version der ersten und zweiten Daten mit den seitens des Sicherheitstokens verwendeten ersten und zweiten Daten übereinstimmt, so führt dies zwangsläufig dazu, dass der Authentisierungsserver hierdurch dasselbe OTP generiert, wie es auch der Sicherheitstoken zuvor generiert hat.

Die anschließende Prüfung, ob das über die Netzwerkverbindung empfangene OTP mit dem weiteren von dem Authentisierungsserver generierten OTP übereinstimmt, muss dann positiv ausfallen, sodass der Authentisierungsserver dann ein Authentisierungssignal generiert, welches die erfolgreiche Authentisierung signalisiert, um hierdurch beispielsweise eine Nutzung eines Dienstes durch den Nutzer freizugeben.

Der Authentisierungsserver ermittelt ferner die aktualisierten ersten Daten auf dieselbe Art und Weise, wie dies auch seitens des Sicherheitstokens erfolgt, und speichert die aktualisierten ersten Daten in der Datenbank, sodass die in dem Sicherheitstoken gespeicherten ersten Daten mit der in der Datenbank gespeicherten Version der ersten Daten übereinstimmt.

Nach einer Ausführungsform der Erfindung werden die bei Einkopplung von elektrischer Energie in den Sicherheitstoken in dem elektronischen Speicher gespeicherten ersten Daten für die kryptografische Ableitung des OTP verwendet. Anschließend werden diese ersten Daten aktualisiert und die aktualisierten ersten Daten werden in dem elektronischen Speicher gespeichert, um die vorherige Version der ersten Daten zu ersetzen. Entsprechend wird dann auch seitens des Authentisierungsservers verfahren, der die aus der Datenbank ausgelesene Version der ersten Daten für die kryptografische Ableitung des weiteren OTP verwendet und erst anschließend die Aktualisierung der ersten Daten vornimmt, um diese aktualisierten ersten Daten in der Datenbank zum Ersatz der vorherigen Version der ersten Daten zu speichern.

Alternativ ist es aber auch möglich, dass die in dem elektronischen Speicher des Sicherheitstokens initial bei der Einkopplung von elektrischer Energie gespeicherten ersten Daten zunächst durch den Sicherheitstoken aktualisiert werden, um dann mit den aktualisierten ersten Daten die kryptografische Ableitung des OTP vorzunehmen. Entsprechend kann seitens des Authentisierungsservers vorgegangen werden, der die aus der Datenbank ausgelesene Version der ersten Daten zuerst aktualisiert, um dann mithilfe der aktualisierten ersten Daten das weitere OTP abzuleiten.

Ferner ist es auch möglich, dass zunächst das OTP von dem Sicherheitstoken angezeigt wird und anschließend die Aktualisierung der ersten Daten und/oder deren Speicherung in dem elektronischen Speicher zur Ersetzung der vorhergehenden Version der ersten Daten vorgenommen wird oder dass zunächst die Aktualisierung der ersten Daten und optional auch deren Speicherung in dem elektronischen Speicher vor der Anzeige des OTP auf der Anzeigevorrichtung des Sicherheitstokens vorgenommen wird.

Nach einer Ausführungsform der Erfindung hat der Sicherheitstoken einen Zähler, der mit jeder kryptografischen Ableitung eines OTP inkrementiert oder dekrementiert wird, um die ersten Daten zu aktualisieren. Beispielsweise handelt es sich bei dem aktuellen Wert des Zählers um die ersten Daten. Diese ersten Daten können unmittelbar Eingang in die kryptografische Ableitung des OTP finden. Alternativ wird aus den ersten Daten zunächst ein weiterer Wert abgeleitet, welcher dann für die kryptografische Ableitung des OTP dient.

Der Authentisierungsserver hat bei dieser Ausführungsform einen Zähler mit identischer Funktionalität, wie der Zähler des Sicherheitstokens, um so die jeweils aktuelle Version der ersten Daten zu erhalten und in der Datenbank zu speichern.

Nach einer weiteren Ausführungsform der Erfindung beinhaltet der Sicherheitstoken einen deterministischen Zufallszahlengenerator, der zur Erzeugung einer Folge von N Zufallszahlen ausgebildet ist, wobei die ersten Daten das i-te Glied der Folge bestimmen. Ein solcher deterministischer Zufallszahlengenerator kann durch eine Hardwareschaltung gebildet werden, wie zum Beispiel ein rückgekoppeltes Schieberegister, wobei die ersten Daten in diesem Fall die in den Registern gespeicherten Datenwerte sind, welche eine bestimmte Zufallszahl am Ausgang des Zufallszahlengenerators zur Folge haben.

Alternativ kann der deterministische Zufallszahlengenerator auch als ein Programm implementiert sein, welches von dem Prozessor des Sicherheitstokens ausgeführt wird; in diesem Fall handelt es sich bei den ersten Daten um die aktuellen Werte von Programmvariablen, die die Ausgabe einer bestimmten Zufallszahl durch das Programm zur Folge haben.

Zu jedem Zustand des Zufallszahlengenerators, das heißt zu jeder von dem Zufallszahlengenerator ausgegebenen Zufallszahl, korrespondieren also entsprechende erste Daten, die diesen Zustand des Zufallsgenerators festlegen und eben diese Zufallszahl am Ausgang bzw. als Ausgabewert des Zufallszahlengenerators zur Folge haben. Eine solche Zufallszahl wird dann von dem Sicherheitstoken für die kryptografische Ableitung des OTP verwendet.

Entsprechend wird auch seitens des Authentisierungsservers vorgegangen, der einen identischen deterministischen Zufallszahlengenerator aufweist, dessen Zustand, und damit dessen erste Daten, sich mit jeder weiteren Erzeugung einer Zufallszahl ändert, wodurch die ersten Daten aktualisiert werden.

Nach einer Ausführungsform der Erfindung erfolgt die kryptografische Ableitung des OTP durch eine Keyed-Hash-Funktion.

Unter einer "Keyed-Hash-Funktion" wird hier insbesondere eine kryptografische Funktion verstanden, die aus einem Eingangswert einen Hashwert berechnet, der dann mithilfe eines geheimen Schlüssels verschlüsselt wird, vergleiche hierzu auch "Keyed-Hash-Functions", S. Bakhtiari et al., Center for Computer Security Research, Department of Computer Science, University of Wollongong, Australia.

Beispielsweise können unmittelbar die ersten Daten als Eingangswert für die Keyed-Hash-Funktion verwendet werden, sodass also ein Hashwert aus den ersten Daten berechnet wird. Die zweiten Daten sind dann das Geheimnis des Nutzers, welche als geheimer Schlüssel zur Verschlüsselung des aus den ersten Daten erhaltenen Hashwerts dienen. Hieraus resultiert dann das OTP.

Alternativ wird ein aus den ersten Daten abgeleiteter oder durch die ersten Daten bestimmter Wert als Eingangswert in die Keyed-Hash-Funktion verwendet, das heißt im Falle eines Zählers ein aus dem aktuellen Zählerwert abgeleiteter Wert oder im Falle eines deterministischen Zufallszahlengenerators die durch die ersten Daten bestimmte Zufallszahl.

Dieser Wert wird dann gehasht und mithilfe der zweiten Daten verschlüsselt, um das OTP zu erhalten. In gleicher Art und Weise wird auch seitens des Authentisierungsservers vorgegangen, um das weitere OTP zu erzeugen, um es mit dem von dem Nutzer-Computersystem empfangenen OTP zu vergleichen.

Ausführungsformen der Erfindung sind besonders vorteilhaft, da der Sicherheitstoken keine eigene Energieversorgung benötigt, sodass die langfristige Funktion des Sicherheitstokens über mehrere Jahre hinweg sichergestellt werden kann. Dies ist besonders vorteilhaft für die Ausführung des Sicherheitstoken als Chipkarte, insbesondere als Wert- oder Sicherheitsdokument. Ein weiterer besonderer Vorteil ist, dass zwischen dem Terminal und dem Authentisierungsserver keine Verbindung aufgebaut werden muss, was den Implementierungsaufwand der Erfindung reduziert und gleichzeitig eine zusätzliche Sicherheit, zum Beispiel gegen eine sogenannte "man in the middle-Attacke" schafft.

Ausführungsformen der Erfindung sind von besonderem Vorteil, da auf zumeist ohnehin vorhandene Hardware zurückgegriffen werden kann, um die Erfindung nutzerseitig zu implementieren, nämlich auf ein Smartphone mit z.B. einer NFC Schnittstelle zur Realisierung des Terminals und einen üblichen PC zur Realisierung des Nutzer-Computersystems. Weitere Hardwarekomponenten, wie zum Beispiel ein Chipkarten-Lesegerät, müssen dann von dem Nutzer nicht angeschafft werden.

Nach einer Ausführungsform der Erfindung werden die folgenden weiteren Schritte von dem Authentisierungsserver durchgeführt, wenn seitens des Authentisierungsservers keine Übereinstimmung mit dem von dem Nutzer-Computersystem empfangenen OTP und mit dem weiteren, von dem Authentisierungsserver generierten OTP festgestellt werden kann:

a) Die ersten Daten werden aktualisiert, das heißt je nach Ausführungsform durch Inkrementierung oder Dekrementierung des Zählers oder durch die Erzeugung einer weiteren Zufallszahl der Folge von Zufallszahlen.

b) Auf der Basis dieser aktualisierten ersten Daten wird dann erneut ein OTP durch den Authentisierungsserver kryptografisch abgeleitet.

c) Das von dem Nutzer-Computersystem empfangene OTP wird erneut verglichen, und zwar mit dem zuvor erneut von dem Authentisierungsserver auf der Basis der aktualisierten ersten Daten erzeugten weiteren OTP.

Diese Schritte a) bis c) werden dann so lange wiederholt, bis entweder eine Übereinstimmung der OTPs in dem Schritt c) gefunden wurde oder eine Abbruchbedingung erreicht worden ist. Als Abbruchbedingung kann beispielsweise eine maximale Anzahl von Wiederholungen der Schritte a) bis c) festgelegt werden, wie zum Beispiel 5, 10, 15 oder 20 Wiederholungen.

Beispielsweise kann es vorkommen, dass ein Nutzer zwar die Erzeugung eines OTP durch den Sicherheitstoken anfordert, das daraufhin in dem Sicherheitstoken angezeigte OTP aber nicht in seinem Nutzer-Computersystem eingibt, weil er bei seiner Tätigkeit unterbrochen wurde oder eine bestimmte Transaktion doch nicht durchführen möchte. Eine andere Möglichkeit ist, dass der Nutzer einen Fehler bei der manuellen Eingabe des OTP macht.

Dies hat dann aber zur Folge, dass eine Aktualisierung der ersten Daten nur durch den Sicherheitstoken erfolgt, nicht aber aufseiten des Authentisierungsservers, sodass die in der Datenbank des Authentisierungsservers gespeicherte Version der ersten Daten nicht mehr mit der aktuellen Version der ersten Daten übereinstimmt, die in dem Sicherheitstoken gespeichert ist. In dieser Situation ermöglicht die einmalige oder erforderlichenfalls mehrmalige Durchführung der oben genannten Schritte a) bis c) dennoch eine Authentisierung und einen damit einhergehenden Abgleich der in der Datenbank gespeicherten Version der ersten Daten mit der in dem Sicherheitstoken gespeicherten Version der ersten Daten, sodass diese wieder übereinstimmen.

Nach einer Ausführungsform der Erfindung ist Voraussetzung dafür, dass eine Authentifizierung des Nutzers gegenüber dem Dienst-Computersystem mithilfe eines OTP erfolgen kann, dass zunächst die aktuelle Version der ersten Daten, die in dem Sicherheitstoken gespeichert sind, in den Datenbankmitteln gespeichert werden. Dies kann anlässlich einer initialen Inbenutzungnahme des Sicherheitstokens erfolgen sowie auch im weiteren Verlauf, nachdem die Abbruchbedingung erreicht worden ist. In dem letzteren Fall wird durch die nochmalige Initialisierung der Datenbankmittel eine Resynchronisation zwischen den Datenbankmitteln und dem Sicherheitstoken durchgeführt.

Zum Auslesen der ersten Daten aus dem Sicherheitstoken wird ein ID-Provider-Computersystem verwendet. Unter einem "ID-Provider-Computersystem" wird hier ein Computersystem verstanden, welches dazu ausgebildet ist, über ein Netzwerk, wie zum Beispiel das Internet, einen Lesezugriff auf einen Sicherheitstoken durchzuführen. Vorzugsweise authentifiziert sich das ID-Provider-Computersystem dabei gegenüber dem Sicherheitstoken mithilfe eines Zertifikats, welches auch eine Angabe der Leserechte des ID-Provider-Computersystems zum Lesen der ersten Daten beinhaltet.

Zum Lesen der ersten Daten aus dem Sicherheitstoken durch das ID-Provider-Computersystem und die nachfolgende Speicherung der ersten Daten in den Datenbankmitteln wird beispielsweise wie folgt vorgegangen:

- Authentifizierung des Nutzers (102) gegenüber dem Sicherheitstoken,

- Authentifizierung des ID-Provider-Computersystems (136) gegenüber dem Sicherheitstoken über das Netzwerk,

- nach erfolgreicher Authentifizierung des Nutzers und des ID-Provider-Computersystems gegenüber dem Sicherheitstoken, Durchführung eines Lesezugriffs des ID-Provider-Computersystems auf den in dem Sicherheitstoken gespeicherten Identifikator, Signierung des Identifikators durch das ID-Provider-Computersystem und Übertragung des signierten Identifkators von dem ID-Provider-Computersystem an das Dienst-Computersystem über das Netzwerk, Prüfung der Signatur des Identifikators durch das Dienst-Computersystem und Speicherung von aktuellen ersten Daten in den Datenbankmitteln mit dem Identifikator als Zugriffsschlüssel.

Dieser Vorgang kann durch den Nutzer ausgelöst werden, beispielsweise über das Nutzer-Computersystem oder das Terminal, insbesondere wenn es sich bei dem Terminal um ein mobiles Telekommunikationsgerät handelt. Hierzu wird von dem Nutzer-Computersystem bzw. von dem Terminal eine Anfrage an das ID-Provider-Computersystem gesendet, um hierdurch das Auslesen der ersten Daten aus dem Sicherheitstoken auszulösen. Diese Anfrage kann über das Netzwerk unmittelbar oder über das Dienst-Computersystem an das ID-Provider-Computersystem gesendet werden.

Andererseits kann das Auslesen der ersten Daten auch durch das Dienst-Computersystem ausgelöst werden, nämlich dann, wenn die Abbruchbedingung erreicht worden ist, sodass eine Resynchronisation erforderlich ist. In diesem Fall sendet das Dienst-Computersystem eine Anforderung zum Lesen der ersten Daten aus dem Sicherheitstoken an das ID-Provider-Computersystem.

Nach dem Lesen der ersten Daten durch das ID-Provider-Computersystem signiert das ID-Provider-Computersystem die ersten Daten und sendet diese an das Dienst-Computersystem, sodass das Dienst-Computersystem die Datenbankmittel zur Speicherung der ersten Daten initialisieren kann, beispielsweise für eine Resynchronisation. Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Beispielsweise kann das Zertifikat dem Standard X.509 oder einem anderen Standard entsprechen. Vorzugsweise handelt es sich bei dem Zertifikat um ein Card Verifiable Certificate (CVC).

In einer anderen Ausführungsform werden die ersten Daten zusammen mit den zweiten Daten durch das ID-Provider-Computersystem und das Sicherheitstoken neu berechnet. Mögliche Verfahren zur Ermittlung der zweiten Daten sind ein Key-Agreement zwischen ID-Provider-Computersystem und Sicherheitstoken oder der Hash-Wert zweier Zufallszahlen beider Parteien. Die zweiten Daten werden dem Sicherheitstoken entweder vom ID-Provider-System zur Speicherung vorgegeben oder die zweiten Daten werden implizit auf einen festen Wert gesetzt, z.B. "0". Die so ermittelten zweiten (und gegebenenfalls ersten) Daten werden von dem Sicherheitstoken gespeichert und vom ID-Provider-Computersystem zur Speicherung in einer Datenbank an das Dienst-Computersystem übermittelt.

Die Vereinbarung neuer erster und zweiter Daten durch den Sicherheitstoken und das ID-Provider-Computersystem hat den Vorteil einer erhöhten Sicherheit. Dadurch wird vermieden, dass es zu einer Wiederholung von OTPs kommen kann. Ferner kann auch eine Denial of Service-Attacke unterbunden werden.

Ein weiterer Vorteil ist, dass der Sicherheitstoken in seinem Lieferzustand nicht initalisiert sein muss, sondern lediglich für den Aufbau der geschützten Verbindung mit Ende-zu-Ende-Verschlüsselung mit dem ID-Provider-Computersystem eingerichtet sein muss. Die Vereinbarung der ersten und zweiten Daten zwischen dem Sicherheitstoken und dem ID-Provider-Computersystem erfolgt dann z. B. bei der Inbenutzungnahme des Sicherheitstokens.

In einem weiteren Aspekt betrifft die Erfindung ein Dienst-Computersystem mit Mitteln zur Erbringung eines Dienstes, für welchen eine Authentisierung erforderlich ist. Bei dem Dienst kann es sich zum Beispiel um einen Log-in auf einer Webseite handeln, um auf bestimmte Inhalte zugreifen zu können, einen Virtual Private Network (VPN)-Server, einen E-Mail-Server, einen Dateiserver oder Druckerserver, für welche jeweils eine Nutzerauthentisierung erforderlich ist.

In einem weiteren Aspekt betrifft die Erfindung ein Computersystem mit einem solchen Dienst-Computersystem, welches ferner ein oder mehrere Sicherheitstoken, ein oder mehrere Nutzer-Computersysteme und ein oder mehrere Terminals, insbesondere Smartphones beinhaltet. Der Sicherheitstoken ist ausgebildet mit

- Mitteln zur Einkopplung von elektrischer Energie zur Energieversorgung des Sicherheitstokens durch ein Terminal,

- Mitteln zum Empfangen eines Kommandos zur Erzeugung des OTP von dem Terminal,

- Mitteln zur kryptografischen Ableitung des OTP mithilfe von in einem elektronischen Speicher des Sicherheitstokens gespeicherten ersten und zweiten Daten,

- Mitteln zur Anzeige des OTP auf einer Anzeigevorrichtung des Sicherheitstokens,

- Mitteln zur Ermittlung von aktualisierten ersten Daten mithilfe einer Funktion, wobei vor der kryptografischen Ableitung des OTP eine Aktualisierung der ersten Daten erfolgt, und

- Mitteln zur Ersetzung der ersten Daten durch die aktualisierten ersten Daten in dem elektronischen Speicher des Sicherheitstokens.

Im Weiteren werden Ausführungsformen der Erfindung mit Bezugnahme auf die Zeichnungen näher erläutert. Es zeigen:

Figur 1    ein Blockdiagramm einer Ausführungsform der Erfindung,

Figur 2    ein Flussdiagramm einer Ausführungsform eines erfindungsgemäßen Verfahrens,

Figur 3    ein Flussdiagramm einer weiteren Ausführungsform eines erfindungsgemäßen Verfahrens,

Figur 4    ein Blockdiagramm einer weiteren Ausführungsform der Erfindung.

Im Weiteren werden einander entsprechende oder identische Elemente oder Schritte der nachfolgenden Ausführungsformen jeweils mit identischen Bezugszeichen gekennzeichnet.

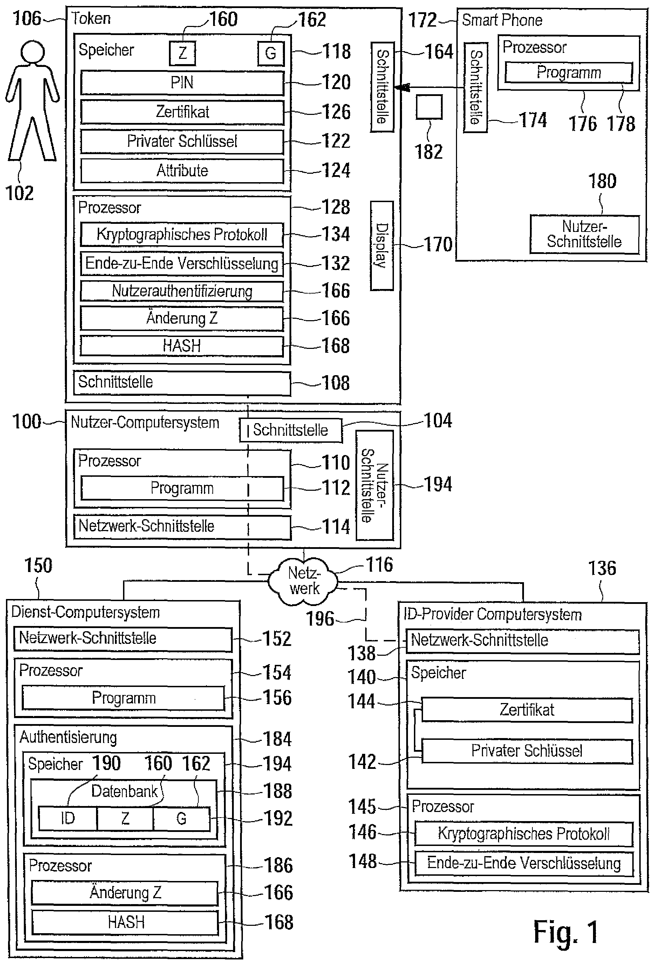

Die Figur 1 zeigt einen Sicherheitstoken 106 eines Nutzers 102. Der Sicherheitstoken 106 hat einen elektronischen Speicher 118, in dem erste Daten 160 und zweite Daten 162 gespeichert sind. Die ersten Daten 160 bestimmen einen Zustand Z des Sicherheitstokens 106, wie zum Beispiel den Zustand eines Zählers oder den Zustand eines deterministischen Zufallszahlengenerators, welchen der Sicherheitstoken 106 aufweisen kann.

Bei den zweiten Daten 162 handelt es sich um ein Geheimnis G des Nutzers 102 bzw. des Sicherheitstokens 106. Die ersten Daten 160 und die zweiten Daten 162 sind jeweils in geschützten Speicherbereichen des Speichers 118 abgespeichert, auf den nur ein Prozessor 128 des Sicherheitstokens 106 zugreifen kann, auf die aber kein unmittelbarer Zugriff über eine Schnittstelle 164 des Sicherheitstokens 106 möglich ist.

Der Prozessor 128 des Sicherheitstokens 106 dient zur Ausführung von Programminstruktionen 166 und zur Ausführung von Programminstruktionen 168. Durch die Programminstruktionen 166 wird eine Funktion implementiert, die zur Ermittlung von aktualisierten ersten Daten 160 dient.

Bei dieser Funktion kann es sich um einen Zähler handeln, wobei die ersten Daten 160 in diesem Fall der aktuelle Wert des Zählers sein können oder ein daraus zum Beispiel mittels einer weiteren kryptografischen Funktion abgeleiteter Wert. Der Zähler kann anstelle der Programminstruktionen 166 auch durch eine elektronische Schaltung des Sicherheitstokens 106 implementiert werden.

Durch die Programminstruktionen 168 wird ein Programmmodul zur kryptografischen Ableitung des OTP basierend auf den ersten Daten 160 und den zweiten Daten 162 gebildet. Insbesondere kann es sich hierbei um eine Keyed-Hash-Funktion handeln.

Der Sicherheitstoken 106 hat ferner ein Display 170, welches in den Körper des Sicherheitstokens 106, wie zum Beispiel einen Chipkartenkörper, integriert ist, und welches von dem Nutzer 102 abgelesen werden kann.

Der Sicherheitstoken 106 verfügt über keine eigene Energieversorgung zur Versorgung des Prozessors 128 und des Displays 170 mit elektrischer Energie. Zum Betrieb des Sicherheitstokens 106 ist es erforderlich, dass dieser in die Reichweite eines Terminals 172 gebracht wird, welches eine Trägerwelle aussendet, durch welche elektrische Energie über die Schnittstelle 164 in den Sicherheitstoken 106 eingekoppelt wird. Bei dem Terminal 172 kann es sich zum Beispiel um ein Smartphone handeln oder ein anderes mobiles Telekommunikationsgerät, welches eine der Schnittstelle 164 entsprechende Schnittstelle 174 aufweist, wie zum Beispiel eine NFC- und/oder RFID-Schnittstelle

Das Terminal 172 hat zumindest einen Prozessor 176 zur Ausführung eines Anwendungsprogramms, wie zum Beispiel einer sogenannten App. Alternativ kann die Funktionalität des Anwendungsprogramms 178 auch auf der Ebene des Betriebssystems des Terminals 172 implementiert sein.

Das Terminal 172 hat ferner eine Nutzerschnittstelle 180, wie zum Beispiel eine Tastatur oder einen Touchscreen.

Über die Nutzerschnittstelle 180 kann der Nutzer das Anwendungsprogramm 178 oder - je nach Ausführungsform - eine entsprechende Funktion des Betriebssystems aufrufen, um eine Anforderung zur Erzeugung eines OTPs einzugeben. Daraufhin erzeugt das Terminal 172 ein entsprechendes Kommando, welches in der Form von einer oder mehreren Kommando-APDUs 182 von der Schnittstelle 174 zu der Schnittstelle 164 übertragen wird.

Nutzerseitig ist ferner ein Nutzer-Computersystem 100 vorhanden. Bei dem Nutzer-Computersystem 100 kann es sich um einen Personal Computer (PC) oder einen Laptop-Computer handeln.

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk kann es sich um ein Computernetzwerk, wie zum Beispiel das Internet, handeln. Das Nutzer-Computersystem 100 hat ferner eine Schnittstelle 104 zur Kommunikation mit einem Sicherheitstoken 106, der eine entsprechende Schnittstelle 108 aufweist. Alternativ ist die Schnittstelle 104 zur Kommunikation mit der Schnittstelle 164 ausgebildet, so dass der Sicherheitstoken 106 keine weitere Schnittstelle 108 haben muss.

Durch die Programminstruktionen 112 wird beispielsweise ein üblicher Internetbrowser, wie zum Beispiel Microsoft Internet Explorer, gebildet, mithilfe dessen der Nutzer 102 eine Netzwerkverbindung über das Netzwerk 116 zum Beispiel mit einem Dienst-Computersystem 150 aufbauen kann.

Der Sicherheitstoken 106 hat in seinem elektronischen Speicher 118 geschützte Speicherbereiche 120, 122 und 124. Der geschützte Speicherbereich 120 dient zur Speicherung eines Referenzwerts, der für die Authentifizierung des Nutzers 102 gegenüber dem Sicherheitstoken 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem Sicherheitstoken 106 verwendet werden kann.

Der geschützte Speicherbereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den Sicherheitstoken selbst betreffen, wie zum Beispiel die Institution, die den Sicherheitstoken erstellt oder ausgegeben hat, die Gültigkeitsdauer des Sicherheitstokens, wie zum Beispiel eine Passnummer oder eine Kreditkartennummer, und/oder eines anderen Attributs, welches als Identifkator des Sicherheitstokens 106 verwendet werden kann.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des Sicherheitstokens 106 gespeichert sein. Alternativ oder zusätzlich kann das Zertifikat auch in einem öffentlichen Verzeichnisserver gespeichert sein.

Der Sicherheitstoken 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem Sicherheitstoken.

Bei einer Ausführungsform mit PIN gibt der Nutzer 102 seine PIN zu seiner Authentifizierung in den Sicherheitstoken 106 ein, beispielsweise über das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der Sicherheitstoken 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Alternativ erfolgt die Authentisierung des Nutzers nicht gegenüber dem Sicherheitstoken, sondern gegenüber dem Dienst-Computersystem. Mit dem Sicherheitstoken kann jeder ein OTP erzeugen; dies kann gegenüber dem Dienst-Computersystem jedoch nur mit der zusätzlichen Authentisierung des legitimen Nutzers verwendet werden. Eine mögliche Ausführungsform der Authentisierung des Nutzers gegenüber dem Dienst-Computersystem ist die Nutzung eines Benutzernamens und Kennwortes.

Die Programminstruktionen 134 dienen zur Ausführung der den Sicherheitstoken 106 betreffenden Schritte eines kryptographischen Protokolls zur Authentifizierung eines ID-Provider-Computersystems 136 gegenüber dem Sicherheitstoken 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 136 gegenüber dem Sicherheitstoken und weist dadurch seine Leseberechtigung zum Lesen der in dem geschützten Speicherbereich 124 gespeicherten Attribute nach. Die Authentifizierung kann auch gegenseitig sein, d.h. auch der Sicherheitstoken 106 muss sich dann gegenüber dem ID-Provider-Computersystem 136 nach demselben oder einem anderen kryptographischen Protokoll authentifizieren.

Die Programminstruktionen 132 dienen zur Ende-zu-Ende-Verschlüsselung von zwischen dem Sicherheitstoken 106 und einem ID-Provider-Computersystem 136 übertragenen Daten, zumindest aber der von dem ID-Provider-Computersystem 136 aus dem geschützten Speicherbereich 124 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem Sicherheitstoken 106 und dem ID-Provider-Computersystem 136 vereinbart wird.

Alternativ zu der in der Figur 1 dargestellten Ausführungsform kann das Nutzer-Computersystem 100 mit seiner Schnittstelle 104 nicht unmittelbar mit der Schnittstelle 108 kommunizieren, sondern über ein an die Schnittstelle 104 angeschlossenes Lesegerät für den Sicherheitstoken 106. Über dieses Lesegerät, wie zum Beispiel einen so genannten Klasse 2-Chipkarten-Terminal, kann auch die Eingabe der PIN erfolgen.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein privater Schlüssel 142 des ID-Provider-Computersystems 136 sowie das entsprechende Zertifikat 144 gespeichert ist. Auch bei diesem Zertifikat kann es sich beispielsweise um ein Zertifikat nach einem PKI-Standard, wie zum Beispiel X.509 handeln. Das Zertifikat beinhaltet eine Angabe der Leseberechtigung des ID-Provider-Computersystem 136 zum Zugriff auf die in dem Sicherheitstoken 106 gespeicherten ersten Daten.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 134 durch den Prozessor 128 des Sicherheitstokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem Sicherheitstoken 106 und dem ID-Provider-Computersystem 136 vereinbart worden ist. Prinzipiell kann jedes an sich vorbekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem Sicherheitstoken 106 den Vertrauensanker für die Authentizität der aus dem Sicherheitstoken 106 ausgelesenen Attribute bildet.

Das Dienst-Computersystem 150 hat eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156, die zur Zurverfügungstellung des Dienstes dienen. Hierbei kann es sich zum Beispiel um die dynamische Generierung von html-Seiten handeln, um einem authentisierten Nutzer Zugriff auf bestimmte Informationen zu geben. Ferner kann durch die Programminstruktionen 156 beispielsweise ein VPN-Server, ein E-Mail-Server, ein Dateiserver oder ein Druckerserver implementiert werden.

Das Dienst-Computersystem 150 hat ein Authentisierungsmodul 184, welches zum Beispiel als Authentisierungsserver ausgebildet sein kann oder welches als Teil der Programminstruktionen 156 implementiert sein kann.

Das Authentisierungsmodul 184 hat in der hier betrachteten Ausführungsform einen Prozessor 186 mit Mitteln zur Ermittlung von aktualisierten ersten Daten, die durch die gleichen Programminstruktionen 166 implementiert sein können wie das für den Sicherheitstoken 106 der Fall ist. Ebenso verfügt das Authentisierungsmodul 184 über Mittel zur kryptografischen Ableitung des OTP, welche wiederum durch die gleichen Programminstruktionen 168 implementiert sein können, wie dies für den Sicherheitstoken 106 der Fall ist.

Das Authentisierungsmodul 184 kann ferner auf eine Datenbank 188 zugreifen, die eine externe Komponente oder, wie in der Figur 1 gezeigt, einen integralen Bestandteil des Authentisierungsmoduls 184 bilden kann. Bei der Datenbank 188 kann es sich um eine relationale Datenbank handeln, in der die ersten Daten 160 und die zweiten Daten 162 eines bestimmten Sicherheitstokens 106 bzw. eines bestimmten Nutzers 102 mit einem Identifikator des Sicherheitstokens 106 und/oder des Nutzers 102 als Zugriffsschlüssel gespeichert sind. Dies kann in der Form von einer oder mehreren Datenbanktabellen 192 erfolgen.

Die Datenbank 188 kann in einem elektronischen Speicher 194 des Authentisierungsmoduls 184 gespeichert sein.

Die Nutzung des von den Programminstruktionen 156 implementierten Dienstes durch den Nutzer 102 setzt dessen vorherige Registrierung voraus. Hierzu wird der Identifikator 190 des Nutzers 102, wie zum Beispiel eine Username-Passwort-Kombination, eine E-Mail-Adresse des Nutzers 102 oder ein Identifikator von dessen Sicherheitstoken 106, wie zum Beispiel eine Kartennummer des Sicherheitstokens 106, verwendet. Unter diesem Identifikator werden die initialen Werte für die ersten Daten 160 und die zweiten Daten 162 in der Datenbanktabelle 192 gespeichert, so wie sie auch bei der Herausgabe des Sicherheitstokens 106 in dem elektronischen Speicher 118 des Sicherheitstokens 106 gespeichert sind. Hierdurch wird sichergestellt, dass initial dieselbe Version der ersten Daten 160 in dem Sicherheitstoken 106 und in der Datenbanktabelle 192 gespeichert ist.

Zur Nutzung des von dem Dienst-Computersystem 150 zur Verfügung gestellten Dienstes kann wie folgt vorgegangen werden:

1. Der Nutzer 102 startet das Anwendungsprogramm 178 auf dem Terminal 172 über die Nutzerschnittstelle 180. Auf diese Art und Weise fordert der Nutzer 102 die Erzeugung eines OTP an. Von dem Anwendungsprogramm 178 wird der Nutzer 102 daraufhin über die Nutzerschnittstelle 180 aufgefordert, den Sicherheitstoken 106 in die Reichweite der Schnittstelle 174 des Terminals 172 zu bringen. Nachdem der Nutzer 102 dies getan hat, wird durch die von der Schnittstelle 174 ausgesendete Trägerwelle elektrische Energie in die Schnittstelle 164 eingekoppelt, sodass der Sicherheitstoken 106 mit elektrischer Energie versorgt wird und der Prozessor 128 zu arbeiten beginnt.

2. Von dem Anwendungsprogramm 178 wird dann eine Anforderung zur Erzeugung eines OTP generiert, welche von dem Terminal 172 über die Schnittstelle 174 als Kommando-APDU 182 (APDU = Application Protocol Data Unit) übertragen wird.

3. Aufgrund des Empfangs der Kommando-APDU 182 wird durch den Sicherheitstoken 106 die Ausführung der Programminstruktionen 168 gestartet. Hierdurch werden die ersten Daten 160 und die zweiten Daten 162 aus dem elektronischen Speicher 118 gelesen. Aus den ersten Daten 160 wird ein Hashwert berechnet. Dieser Hashwert wird mit den zweiten Daten 162 verschlüsselt, zum Beispiel nach einem symmetrischen Verschlüsselungsverfahren. Das Ergebnis dieser Keyed-Hashing-Funktion, die durch die Programminstruktionen 168 implementiert wird, ist das OTP. Der Prozessor 128 steuert dann das Display 170 an, sodass das OTP auf dem Display 170 angezeigt wird.

4. Ferner wird die Ausführung der Programminstruktionen 166 gestartet, um die ersten Daten 160 zu aktualisieren. Für den Fall, dass die Programminstruktionen 166 einen Zähler implementieren, handelt es sich bei den ersten Daten 160 um den Wert Z des Zählers. Zur Aktualisierung des Werts Z wird dieser durch Ausführung der Programminstruktionen 166 je nach Ausführungsform entweder inkrementiert oder dekrementiert. Der daraus resultierende aktualisierte Wert des Zählers wird in den elektronischen Speicher 118 gespeichert, wobei die vorherige Version des Werts Z überschrieben wird. Das Geheimnis G, das heißt die zweiten Daten 162, bleiben dagegen unverändert.

5. Der Nutzer 102 stellt mithilfe seines Nutzer-Computersystems 100 eine Netzwerkverbindung über das Netzwerk 116 mit dem Dienst-Computersystem 150 her. Dies kann so erfolgen, dass der Nutzer 102 den durch die Programminstruktionen 112 implementierten Internetbrowser startet und eine URL des Dienst-Computersystems 150 eingibt. Das Dienst-Computersystem 150 generiert daraufhin eine Aufforderung an den Nutzer 102 zu dessen Authentisierung, wobei diese Anforderung auf dem Internetbrowser angezeigt wird.

6. Über eine Nutzerschnittstelle 194 des Nutzer-Computersystems 100, wie zum Beispiel eine Tastatur, gibt der Nutzer dann das OTP in das Nutzer-Computersystem 100, das heißt die von dem Internetbrowser angezeigte Webseite des Dienst-Computersystems 150, ein. Hierzu liest der Nutzer 102 das auf dem Display 170 des Sicherheitstokens 106 angezeigte OTP ab und gibt dieses manuell zum Beispiel über eine Tastatur der Nutzerschnittstelle 194 ein. Alternativ kann auch eine Spracheingabe erfolgen oder eine automatisierte Eingabe. Beispielsweise ist es möglich, dass das Nutzer-Computersystem 100 mit einer Kamera ausgestattet ist, wie zum Beispiel einer sogenannten Webcam, mithilfe derer das auf dem Display 170 angezeigte OTP aufgenommen und erfasst wird. Zusätzlich zu dem OTP gibt der Nutzer 102 in die Webseite des Dienst-Computersystems 150, die von seinem Internetbrowser auf dem Nutzer-Computersystem 100 angezeigt wird, seinen Identifikator ein.

7. Das OTP und der Identifikator werden dann über die Netzwerkverbindung über das Netzwerk 116 von dem Nutzer-Computersystem 100 an das Dienst-Computersystem 150 übertragen, nachdem der Nutzer 102 beispielsweise die Enter-Taste auf seiner Tastatur betätigt hat.

8. Aufgrund des Empfangs des Identifikators und des OTPs wird dann durch das Authentisierungsmodul 184 ein Zugriff auf die Datenbank 188 mit dem Identifikator als Zugriffsschlüssel durchgeführt, um die in der Datenbanktabelle 192 gespeicherte Version der ersten Daten 160 und der zweiten Daten 162 auszulesen.

9. Daraufhin wird die Ausführung der Programminstruktionen 168 gestartet, um zunächst einen Hashwert aus den ersten Daten 160 zu erzeugen, welcher dann mithilfe der zweiten Daten 162 verschlüsselt wird, und zwar nach demselben Keyed-Hash-Verfahren, wie dies auch durch die Programminstruktionen 168 seitens des Sicherheitstokens 106 implementiert wird.

10. Das Authentisierungsmodul 184 vergleicht dann das von dem Nutzer-Computersystem 100 über die Netzwerkverbindung empfangene OTP mit dem seitens des Authentisierungsmoduls 184 abgeleiteten weiteren OTP. Bei Übereinstimmung der beiden OTPs gilt der Nutzer 102 als authentisiert und das Authentisierungsmodul 184 generiert ein Authentisierungssignal, woraufhin eine Nutzung des von den Programminstruktionen 156 implementierten Dienstes durch den Nutzer 102 freigegeben wird. Ein entsprechendes Freigabesignal kann über die Netzwerkverbindung von dem Dienst-Computersystem 150 an den Internetbrowser des Nutzer-Computersystems 100 übertragen und dort angezeigt werden. Im gegenteiligen Fall wird von dem Authentisierungsmodul 184 ein Fehlersignal generiert, welches ebenfalls zu dem Nutzer-Computersystem 100 übertragen und auf dem Internet-browser angezeigt werden kann, wie zum Beispiel "Authentisierung fehlgeschlagen".

11. Ferner wird die Ausführung der Programminstruktionen 166 gestartet, um die ersten Daten 160, die in der Datenbank 188 gespeichert sind, ebenfalls zu aktualisieren, wie dies zuvor schon seitens des Sicherheitstokens 106 bezüglich der in dem Speicher 118 gespeicherten Version der ersten Daten 160 erfolgt ist. Im Falle einer Implementierung in Form eines Zählers wird durch die Programminstruktionen 166 der Wert von Z wiederum inkrementiert oder dekrementiert und dann der so aktualisierte Wert von Z in die Datenbank 188 zurückgeschrieben, beispielsweise indem der zuvor in der Datenbanktabelle 192 gespeicherte Wert von Z überschrieben wird. Im Ergebnis sind dann dieselben Versionen der ersten Daten 160 in dem Sicherheitstoken 106 und in der Datenbank 188 gespeichert.

Bei einer nachfolgenden Authentisierung des Nutzers 102 wird in gleicher Art und Weise verfahren, wobei dann aufgrund des Empfangs einer weiteren Kommando-APDU 182 die in dem Speicher 118 bzw. der Datenbank 188 gespeicherten aktualisierten Werte von Z für die Erzeugung des nächstfolgenden OTPs verwendet werden. In entsprechender Art und Weise wird für alle nachfolgenden OTPs verfahren.

Nach einer weiteren Ausführungsform der Erfindung wird nicht unmittelbar der Wert des Zählers Z verwendet, um daraus einen Hashwert durch die Programminstruktionen 168 abzuleiten, sondern es wird zunächst aus Z ein weiterer Wert A abgeleitet. Für diesen Wert A wird dann durch die Programminstruktionen 168 ein Hashwert gebildet, der dann anschließend mithilfe der zweiten Daten 162 verschlüsselt wird. Die Ableitung des Werts A aus dem Wert Z kann im Prinzip mit jeder injektiven mathematischen Funktion erfolgen.

Bei einer Ausführungsform, bei der die Programminstruktionen 166 einen deterministischen Zufallszahlengenerator implementieren, verhält es sich wie folgt: In diesem Fall kann es sich bei den ersten Daten 160 um mehrere Datenwerte handeln, die den aktuellen Zustand des Zufallszahlengenerators festlegen, wie zum Beispiel die Inhalte von dessen Schieberegistern oder Programmvariablen. Dabei entspricht jeder Zustand i des Zufallszahlengenerators einem i-ten Glied der Folge von Zufallszahlen, die der Zufallszahlengenerator bei entsprechender Taktung nacheinander ausgibt.

Bei dieser Implementierung wird der Hashwert nicht unmittelbar aus den ersten Daten 160 berechnet, sondern aus der i-ten Zufallszahl der Folge von Zufallszahlen, welche aufgrund der aktuellen Version der ersten Daten 160 am Ausgang des Zufallszahlengenerators resultiert. Es wird also der Hashwert aus dem i-ten Glied der Folge von Zufallszahlen berechnet, welche durch die aktuelle Version der ersten Daten festgelegt ist, und dieser Hashwert wird dann wiederum mit den zweiten Daten 162 verschlüsselt, woraus sich das OTP ergibt.

Die Aktualisierung der ersten Daten 160 erfolgt hier so, dass die Erzeugung der nächsten Zufallszahl i+1 der Folge von dem Zufallszahlengenerator angefordert wird, indem dieser beispielsweise ein Taktsignal erhält, wodurch dessen Schieberegister angesprochen werden, sodass sich hierdurch der Zustand des Zufallszahlengenerators entsprechend ändert, insbesondere die in den Schieberegistern gespeicherten Werte. Diese Werte werden dann als aktualisierte erste Daten 160 in dem elektronischen Speicher 118 bzw. der Datenbank 188 gespeichert. Für eine nachfolgende Erzeugung des i+1. Gliedes der Folge werden die ersten Daten 160 wieder in den Zufallszahlengenerator, das heißt die Programminstruktionen 166, geladen, um hierdurch das i+1. Glied der Folge zu erhalten.

Bei einer Ausführungsform, bei der die Programminstruktionen 166 einen Zufallszahlengenerator implementieren, kann also wie folgt vorgegangen werden:

Aufgrund des Empfangs der Kommando-APDU 182 werden die ersten Daten 160 in dem durch die Programminstruktionen 166 implementierten Zufallszahlengenerator eingegeben, welcher daraufhin das durch die ersten Daten 160 repräsentierte i-te Glied der Folge von Zufallszahlen ausgibt. Aus diesem i-ten Glied der Folge wird dann das OTP berechnet, und zwar durch Ausführung der Programminstruktionen 168. Zur Aktualisierung der ersten Daten 160 wird die Erzeugung einer weiteren Zufallszahl von dem Zufallszahlengenerator angefordert, nämlich die Erzeugung des i+1. Gliedes der Folge. Hierdurch ändert sich zwangsläufig der Zustand des Zufallszahlengenerators und damit die ersten Daten 160. Diese somit aktualisierten ersten Daten 160 ersetzen dann die zuvor in dem Speicher 118 bzw. der Datenbanktabelle 192 gespeicherten ersten Daten 160.

Ansonsten wird genauso vorgegangen wie bei der Ausführungsform mit Zähler.

Wenn es sich bei den von dem Zufallszahlengenerator erzeugten Pseudozufallszahlen um eine (modifizierte) Blockchiffre handelt, kann er die Keyed-Hash-Function ersetzen. Anstelle des hashens der ersten Daten mit den zweiten Daten verschlüsselt der Pseudo-Zufallszahlengenerator die ersten Daten mit den zweiten Daten. Das hier beschriebene anschließende Hashen des Kryptogramms mit den zweiten Daten kann dann entfallen.

Wenn beispielsweise der Zufallszahlengenerator ein Blockchiffre für PRNG_i, d.h. den ersten Daten, mit Hilfe eines Seeds, d.h. den zweiten Daten, erzeugt, kann zur Aktualisierung der ersten Daten wie folgt vorgegangen werden:

$$PRNG\_1 = Blockchiffre\ (PRNG\_0,\ Seed)$$

$$PRNG\_2 = Blockchiffre\ (PRNG\_1,\ Seed)$$

$$PRNG\_3 = Blockchiffre\ (PRNG\_2,\ Seed)$$

$$\ldots$$

$$PRNG\_i+1 = Blockchiffre\ (PRNG\_i,\ Seed)$$

Zur Implementierung des Zufallszahlengenerators kann ein Verschlüsselungsalgorithmus verwendet werden, wie z.B. AES, DES oder Triple DES. Dadurch ist ein hohes Maß an Entropie sichergestellt.

Zur Erzeugung des OTP seitens des Dienst-Computersystems 150 ist es zunächst erforderlich, das eine aktuelle Version der ersten Daten in der Datenbank 188 gespeichert ist. Die unveränderlichen zweiten Daten sind bereits in der Datenbank 188 gespeichert; dieses Speicherung der zweiten Daten erfolgt beispielsweise anläßlich der Produktion oder Personalisierung des Sicherheitstokens 106.

Zum initialen Lesen der ersten Daten aus dem Sicherheitstokens 106 wird beispielsweise wie folgt vorgegangen:

1. Authentifizierung des Nutzers 102 gegenüber dem Sicherheitstoken 106.

Der Nutzer 102 authentifiziert sich gegenüber dem Sicherheitstoken 106. Bei einer Implementierung mit PIN gibt der Nutzer 102 hierzu seine PIN beispielsweise über das Nutzer-Computersystem 100 oder einen daran angeschlossenen Chipkarten-Terminal ein. Durch Ausführung der Programminstruktionen 130 prüft dann der Sicherheitstoken 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.

2. Authentifizierung des ID-Provider-Computersystems 136 gegenüber dem Sicherheitstoken 106.

Hierzu wird eine Verbindung zwischen dem Sicherheitstoken 106 und dem ID-Provider-Computersystem 136 über das Nutzer-Computersystem 100 und das Netzwerk 116 hergestellt. Beispielsweise überträgt das ID-Provider-Computersystem 136 sein Zertifikat 144 über diese Verbindung an den Sicherheitstoken 106. Durch die Programminstruktionen 134 wird dann eine so genannte Challenge generiert, d.h. beispielsweise eine Zufallszahl. Diese Zufallszahl wird mit dem in dem Zertifikat 144 beinhalteten öffentlichen Schlüssel des ID-Provider-Computersystems 136 verschlüsselt. Das resultierende Chiffrat wird von dem Sicherheitstoken 106 über die Verbindung an das ID-Provider-Computersystem 136 gesendet. Das ID-Provider-Computersystem 136 entschlüsselt das Chiffrat mit Hilfe seines privaten Schlüssels 142 und erhält so die Zufallszahl. Die Zufallszahl sendet das ID-Provider-Computersystem 136 über die Verbindung an den Sicherheitstoken 106 zurück. Durch Ausführung der Programminstruktionen 134 wird dort geprüft, ob die von dem ID-Provider-Computersystem 136 empfangene Zufallszahl mit der ursprünglich generierten Zufallszahl, d.h. der Challenge, übereinstimmt. Ist dies der Fall, so gilt das ID-Provider-Computersystem 136 als gegenüber dem Sicherheitstoken 106 authentifiziert. Die Zufallszahl kann als symmetrischer Schlüssel für die Ende-zu-Ende Verschlüsselung verwendet werden.

3. Nachdem sich der Nutzer 102 erfolgreich gegenüber dem Sicherheitstoken 106 authentifiziert hat, und nachdem sich das ID-Provider-Computersystem 136 erfolgreich gegenüber dem Sicherheitstoken 106 authentifiziert hat, erhält das ID-Provider-Computersystem 136 eine Leseberechtigung zum Auslesen, eines, mehrerer oder aller der in dem geschützten Speicherbereich 124 gespeicherten Attribute und insbesondere der ersten Daten und eines Identifikators. Aufgrund eines entsprechenden Lesekommandos, welches das ID-Provider-Computersystem 136 über die Verbindung an den Sicherheitstoken 106 sendet, werden die Attribute, d.h. der Identifikator, und die ersten Daten 160 aus den jeweiligen Speicherbereichen des Sicherheitstokens 106 ausgelesen und durch Ausführung der Programminstruktionen 132 verschlüsselt. Die verschlüsselten ersten Daten 160 und der Identifikator werden über die Verbindung 196 mit Ende-zu-Ende Verschlüsselung an das ID-Provider-Computersystem 136 übertragen und dort durch Ausführung der Programminstruktionen 148 entschlüsselt.

Die ersten Daten 160 und der Identifikator werden von dem ID-Provider-Computersystem mit Hilfe seines Zertifikats 144 signiert und über das Nutzer-Computersystem 100 oder direkt an das Dienst-Computersystem 150 übertragen. Dadurch wird das Dienst-Computersystem 150 über die aus dem Sicherheitstoken 106 ausgelesenen ersten Daten 160 und den Identifikator in Kenntnis gesetzt, sodass das Dienst-Computersystem 150 die ersten Daten 160 unter Verwendung des Identifikators als Zugriffsschlüssel in die Datenbank 188 schreiben kann, um diese damit zu initialisieren.

Durch die Notwendigkeit der Authentifizierung des Nutzers 102 gegenüber dem Sicherheitstoken 106 und der Authentifizierung des ID-Provider-Computersystems 136 gegenüber dem Sicherheitstoken 106 ist der notwendige Vertrauensanker geschaffen, sodass das Dienst-Computersystem 150 sicher sein kann, dass die ihm von dem ID-Provider-Computersystem 136 mitgeteilten Attribute des Nutzers 102 zutreffend und nicht verfälscht sind.

Je nach Ausführungsform kann die Reihenfolge der Authentifizierung unterschiedlich sein. Beispielsweise kann vorgesehen sein, dass sich zunächst der Nutzer 102 gegenüber dem Sicherheitstoken 106 authentifizieren muss und nachfolgend das ID-Provider-Computersystem 136. Es ist aber grundsätzlich auch möglich, dass sich zunächst das ID-Provider-Computersystem 136 gegenüber dem Sicherheitstoken 106 authentifizieren muss und erst nachfolgend der Nutzer 102.

In dem ersten Fall ist der Sicherheitstoken 106 beispielsweise so ausgebildet, dass er nur durch Eingabe einer korrekten PIN oder eines korrekten biometrischen Merkmals durch den Nutzer 102 freigeschaltet wird. Erst diese Freischaltung ermöglicht den Start der Programminstruktionen 132 und 134 und damit die Authentifizierung des ID-Provider-Computersystems 136.

Im zweiten Fall ist ein Start der Programminstruktionen 132 und 134 auch bereits möglich, wenn sich der Nutzer 102 noch nicht gegenüber dem Sicherheitstoken 106 authentifiziert hat. In diesem Fall sind beispielsweise die Programminstruktionen 134 so ausgebildet, dass das ID-Provider-Computersystem 136 erst dann einen Lesezugriff auf den geschützten Speicherbereich 124 zum Auslesen eines oder mehrerer der Attribute durchführen kann, nachdem von den Programminstruktionen 130 die erfolgreiche Authentifizierung auch des Nutzers 102 signalisiert worden ist.

Beim Betrieb des in der Figur 1 gezeigten Computersystems kann es vorkommen, dass der Nutzer 102 zwar die Erzeugung eines OTPs anfordert, und dieses auch auf dem Display 170 angezeigt wird, dieses dann aber nicht in das Nutzer-Computersystem 100 zur Übertragung an das Dienst-Computersystem 150 eingibt, weil der Nutzer 102 den geplanten Dienst doch nicht nutzen möchte, zum Beispiel weil er bei seiner Tätigkeit unterbrochen worden ist.

Dies hat zur Folge, dass zwar die ersten Daten 160 in den elektronischen Speicher 118 aktualisiert werden, nicht aber die ersten Daten 160 in der Datenbanktabelle 192. Wenn zu einem späteren Zeitpunkt der Nutzer 102 doch den Dienst nutzen möchte, so bringt er seinen Sicherheitstoken 106 erneut in die Reichweite des Terminals 172 und fordert erneut die Erzeugung eines OTPs an. Dies hat zur Folge, dass seitens des Sicherheitstokens 106 das OTP auf der Basis einer neueren Version der ersten Daten 160 erzeugt wird, als dies seitens des Authentisierungsmoduls 184 der Fall ist.

Das von dem Dienst-Computersystem 150 über die Netzwerkverbindung empfangene OTP muss sich daher von dem OTP unterscheiden, welches das Authentisierungsmodul generiert. Um in einer solchen Situation dennoch eine Authentisierung zu ermöglichen, wird wie folgt vorgegangen:

Wenn das empfangene OTP nicht mit dem von dem Authentisierungsmodul erzeugten weiteren OTP übereinstimmt, werden durch Ausführung der Programminstruktionen 166 durch das Authentisierungsmodul 184 die ersten Daten 160 aktualisiert, ohne diese zunächst in die Datenbanktabelle 192 zurückzuschreiben. Mithilfe dieser aktualisierten Version der ersten Daten 160 wird dann erneut ein weiteres OTP durch das Authentisierungsmodul 184 erzeugt und mit dem empfangenen OTP verglichen.

Liegt nun eine Übereinstimmung vor, so gilt der Nutzer 102 als authentisiert. Schlägt die Überprüfung wiederum fehl, das heißt stimmen das empfangende OTP und das weitere OTP immer noch nicht überein, so werden die ersten Daten 160 erneut von dem Authentisierungsmodul 184 durch die Ausführung der Programminstruktionen 166 aktualisiert. Dieser Vorgang wird so lange durchgeführt, bis eine Übereinstimmung der OTPs vorliegt oder bis eine Abbruchbedingung erreicht ist. Als Abbruchbedingung kann beispielsweise eine maximale Anzahl von Wiederholungen festgelegt sein, um dadurch einen "brute force"-Angriff abwehren zu können.

Wenn die Abbruchbedingung erreicht ist, kann eine Synchronisation zwischen dem Authentisierungsmodul 184 und dem Sicherheitstoken 106 durch erneute Initialisierung der Datenbank 188 erfolgen. Hierzu generiert das Authentisierungsmodul 184 eine Anforderung zum Lesen der ersten Daten und sendet diese Anforderung über das Netzwerk 116 an das ID-Provider-Computersystem 136, was daraufhin erneut einen Lesezugriff auf den Sicherheitstoken 106 durchführt, wie oben beschrieben, um die ersten Daten und den Identifikator auszulesen. Das ID-Provider-Computersystem 136 antwortet dann also auf die Anforderung des Authentisierungsmoduls 184 mit den signierten ersten Daten und dem Identifikator, sodass das Authentisierungsmodul 184 nach Prüfung der Validität der Signatur in der Datenbank 188 die unter dem Identifikator gespeicherten ersten Daten 160 durch die aktuelle Version der ersten Daten 160 ersetzt. Daraufhin wird durch das Authentisierungsmodul erneut ein weiteres OTP generiert, und zwar mithilfe der aktualisierten ersten Daten 160 und dieses weitere OTP wird auf Übereinstimmung mit dem von dem Nutzer-Computersystem 100 empfangenen OTP geprüft, um so eine Authentifizierung des Nutzers durchzuführen.

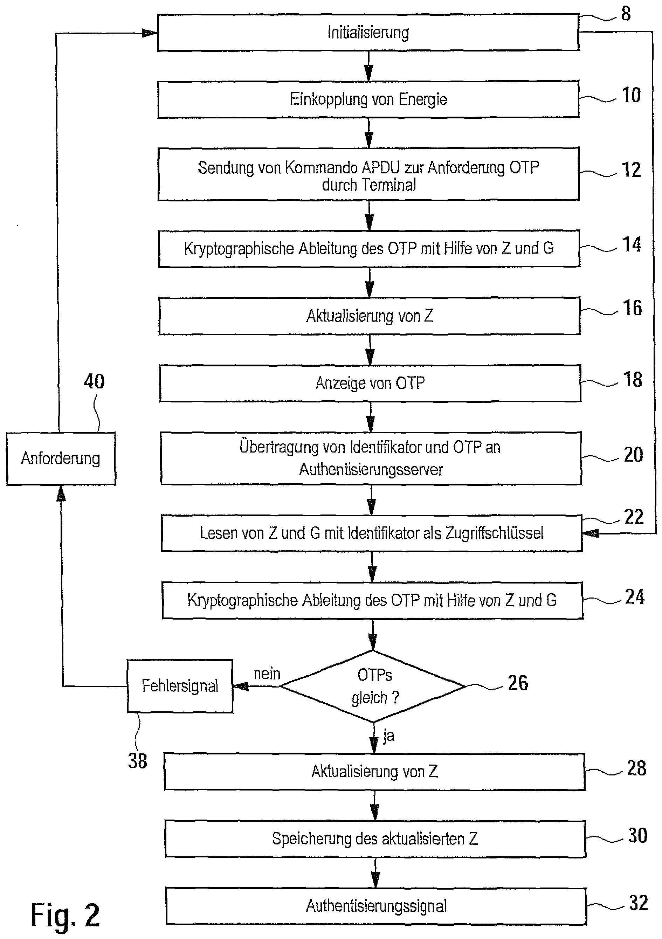

Die Figur 2 zeigt eine Ausführungsform eines erfindungsgemäßen Verfahrens. Zunächst wird in dem Schritt 8 eine Initialisierung der Datenbank 188 durchgeführt, wie oben beschrieben, und zwar beispielsweise anlässlich der Inbenutzungnahme des Sicherheitstokens 106.

Anschließend kann der Nutzer 102 dann den Sicherheitstoken 106 für eine Authentifzierung verwenden:

In dem Schritt 10 bringt der Nutzer 102 den Sicherheitstoken 106 in die Reichweite des Terminals 172, sodass der Sicherheitstoken 106 mit Energie versorgt wird. In dem Schritt 12 wird dann eine Kommando-APDU 182 von dem Terminal 172 an den Sicherheitstoken 106 gesendet, um die Erzeugung eines OTP anzufordern. In dem Schritt 14 liest der Sicherheitstoken 106 die ersten Daten 160 und die zweiten Daten 162 aus seinem Speicher und leitet daraus mithilfe seiner Keyed-Hash-Funktion, wie sie durch die Programminstruktionen 168 implementiert wird, das OTP ab. Anschließend werden in dem Schritt 16 die ersten Daten aktualisiert und in dem Speicher 118 gespeichert, um die vorherige Version der ersten Daten durch die aktualisierten ersten Daten zu ersetzen.

Das von dem Sicherheitstoken 106 erzeugte OTP wird in dem Schritt 18 auf dem Display 170 des Sicherheitstokens 106 angezeigt.

In dem Schritt 20 wird eine Netzwerkverbindung zwischen dem Nutzer-Computersystem 100 und dem Dienst-Computersystem 150 aufgebaut. Das OTP wird von dem Nutzer 102 von dem Display 170 abgelesen und über eine Nutzerschnittstelle 194 in das Computersystem 100 eingegeben sowie auch ein Identifikator des Nutzers 102 und/oder des Sicherheitstokens 106. Der Identifikator kann auch in dem Nutzer-Computersystem 100 gespeichert sein, wenn der Nutzer immer denselben Sicherheitstoken benutzt oder nur ein Nutzer das Nutzer-Computersystem 100 nutzt - dann ist nicht jedes Mal eine Eingabe des Identifikators erforderlich.

Über die Netzwerkverbindung werden das OTP und der Identifikator an einen Authentisierungsserver des Dienst-Computersystems 150, beispielsweise das Authentisierungsmodul 184, übertragen. Der Authentisierungsserver liest in dem Schritt 22 die ersten Daten 160 und die zweiten Daten 162 aus einer Datenbank mithilfe des Identifikators als Zugriffsschlüssel und leitet in dem Schritt 24 das OTP mithilfe desselben kryptografischen Algorithmus, das heißt beispielsweise mithilfe einer Keyed-Hash-Funktion, aus den ersten und zweiten Daten ab, die zuvor aus der Datenbank gelesen worden sind.

In dem Schritt 26 überprüft der Authentisierungsserver dann, ob das von dem Nutzer-Computersystem empfangene OTP mit dem durch den Authentisierungsserver abgeleiteten OTP übereinstimmt. Ist dies der Fall, werden in dem Schritt 28 die ersten Daten seitens des Authentisierungsservers aktualisiert und in dem Schritt 30 in der Datenbanktabelle 192 gespeichert. In dem Schritt 32 wird schließlich ein Authentisierungssignal von dem Authentisierungsserver generiert, sodass die Nutzung des von dem Dienst-Computersystem zur Verfügung gestellten Dienstes für den Nutzer 102 freigegeben wird.

Falls die Überprüfung der OTPs in dem Schritt 26 ergibt, dass diese nicht übereinstimmen, wird hingegen von dem Authentisierungsserver in dem Schritt 38 ein Fehlersignal generiert.. Aufgrund des Fehlersignals wird dann vorzugsweise in dem Schritt 38 eine Anforderung zur nochmaligen Initialisierung der Datenbank in dem Schritt 8 erzeugt und zwar beispielsweise von dem Authentisierungsmodul 184. Nachdem diese nochmalige Initialisierung der Datenbank durchgeführt worden ist, geht die Ablaufsteuerung zu dem Schritt 22, um nochmals ein weiteres OTP zu erzeugen und um dann in den nachfolgenden Schritten damit die Authentifizierung durchzuführen.

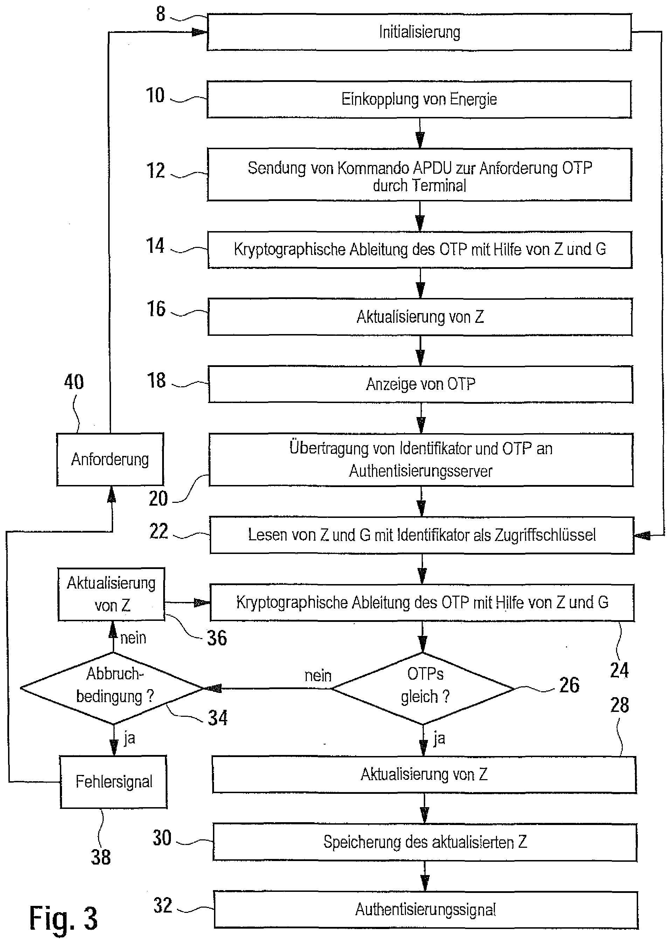

Die Figur 3 zeigt eine alternative Ausführungsform eines erfindungsgemäßen Verfahrens, wobei die Schritte 8 bis 32 und 40 identisch sind zu der Ausführungsform gemäß Figur 2. Im Unterschied zu der Ausführungsform gemäß Figur 2 wird für den Fall, dass die Überprüfung in dem Schritt 26 keine Übereinstimmung der OTPs ergibt, zu dem Schritt 34 verzweigt, in dem geprüft wird, ob eine Abbruchbedingung erfüllt ist.

Bei dieser Abbruchbedingung kann es sich um eine maximale Anzahl von Wiederholungen des Schritts 26 oder eine Zeitdauer handeln. Wenn die Abbruchbedingung nicht erfüllt ist, wird anschließend der Schritt 36 ausgeführt, indem seitens des Authentisierungsservers eine Aktualisierung der ersten Daten vorgenommen wird. Auf der Basis dieser nur authentisierungsserverseitig vorgenommenen Aktualisierung wird dann der Schritt 24 erneut durchgeführt und in dem Schritt 26 wird erneut eine Überprüfung der OTPs vorgenommen. Falls diese immer noch nicht übereinstimmen sollten, werden die Schritte 34, 36, 24 und 26 so lange wiederholend ausgeführt, bis eine Übereinstimmung vorliegt oder bis die Abbruchbedingung erfüllt ist. Erst nach Erfüllung der Abbruchbedingung wird dann bei dieser Ausführungsform das Fehlersignal in dem Schritt 38 erzeugt. Die aktualisierten Daten werden erst dann in die Datenbank des Dienst-Computersystems zurückgeschrieben, nachdem das OTP in dem Schritt 26 erfolgreich verifiziert wurde. Zuvor werden die aktualisierten Daten z.B. in einem Arbeitsspeicher temporär gespeichert.

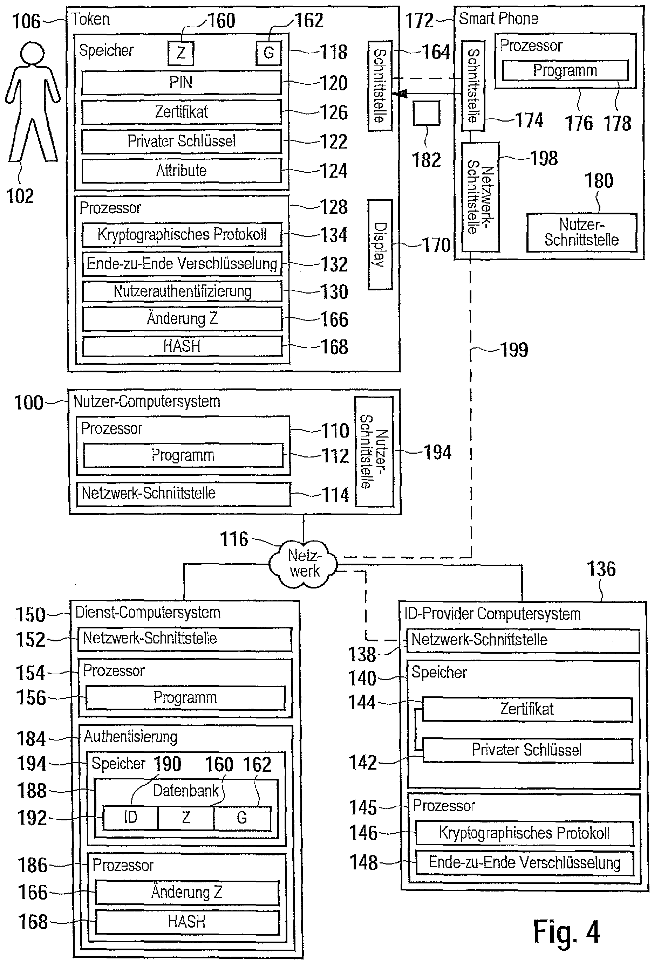

Die Figur 4 zeigt eine weitere Ausführungsform eines erfindungsgemäßen Computersystems. Im Unterschied zu der Ausführungsform gemäß Figur 1 hat das Nutzer-Computersystem 100 keine Schnittstelle 104 zu dem Sicherheitstoken 106; bei dem Sicherheitstoken 106 entfällt dementsprechend die Schnittstelle 108.

Der Terminal 172, bei dem es sich beispielsweise um ein mobiles Telekommunikationsgerät, insbesondere ein Smartphone, handeln kann, hat eine Netzwerk-Schnittstelle 198 zur Verbindung mit dem Netzwerk 116, welches ein Mobilfunknetz beinhalten kann.

Bei dieser Ausführungsform wird anstelle der Verbindung 196 eine Verbindung 199 zwischen dem Sicherheitstoken 106 und dem ID-Provider-Computersystem 136 aufgebaut, um die ersten Daten 160 und den Identifikator auszulesen. Diese Verbindung 199 erstreckt sich von dem Sicherheitstoken 108 über das Terminal 173 und das Netzwerk 116 zu dem ID-Provider-Computersystem 136.

Nach Ausführungsformen der Erfindung liest das ID-Provider-Computersystem 136 über die Verbindung 196 gemäß der Ausführungsform nach Figur 1 bzw. über die Verbindung 199 gemäß Ausführungsform Figur 4 nicht nur den Identifikator, wie zum Beispiel die RID, sondern auch die ersten Daten 160 und überträgt dann die ersten Daten 160 und den Identifikator an das Dienst-Computersystem 150, sodass die Datenbank 188 mit den aus dem Sicherheitstoken 106 ausgelesenen ersten Daten 160 aktualisiert werden kann.

Aufgrund des Lesezugriffs kann der Sicherheitstoken 106 einen Zufallswert generieren, um neue erste Daten 160 zu erzeugen, die die vorherige Version der ersten Daten 160 in dem Speicher 118 des Sicherheitstokens 106 ersetzt. In diesem Fall werden die aufgrund des Lesezugriffs neu erzeugten ersten Daten 160 von dem ID-Provider-Computersystem 136 gelesen und zu dem Dienst-Computersystem 150 zur Initialisierung der Datenbank 188 bzw. zur Resynchronisation übertragen.

Alternativ werden neue erste Daten 160 seitens des ID-Provider-Computersystems 136 generiert und zu dem Dienst-Computersystem 150 zusammen mit dem zuvor ausgelesenen Identifikator übertragen. Zusätzlich werden in diesem Fall diese neuen ersten Daten 160 von dem ID-Provider-Computersystem 136 mit Ende-zu-Ende-Verschlüsselung über die Verbindung 196 bzw. die Verbindung 199 in den Sicherheitstoken 106 geschrieben, um dort die vorherige Version der ersten Daten 160 zu ersetzen. In analoger Art und Weise kann auch das zwischen dem Sicherheitstoken 106 und dem Authentisierungsmodul 184 geteilte Geheimnis, das heißt die zweiten Daten 162, erneuert und ausgetauscht werden.

Vorzugsweise wird so vorgegangen, dass einerseits die zweiten Daten 162 unverändert bleiben und andererseits sowohl der Sicherheitstoken 106 als auch das ID-Provider-Computersystem 136 jeweils eine Zufallszahl generieren, die über die sichere Verbindung 196 bzw. 199 zwischen dem IT-Token 106 und dem ID-Provider-Computersystem 136 ausgetauscht werden. Diese beiden Zufallszahlen werden dann jeweils durch den Sicherheitstoken 106 und das ID-Provider-Computersystem 136 miteinander kombiniert, wie zum Beispiel konkateniert, und es wird aus den kombinierten Zufallszahlen sowohl seitens des Sicherheitstokens 106 als auch seitens des ID-Provider-Computersystems 136 jeweils ein identischer Hashwert W gebildet.

Aus diesem Hashwert W wird dann das gemeinsame Geheimnis G, das heißt die zweiten Daten 162, sowie beispielsweise der initiale Zählerwert Z, das heißt die ersten Daten 160, abgeleitet. Alternativ kann auch der initiale Zählerwert Z per Konvention auf einen bestimmten Wert, wie zum Beispiel 0, gesetzt werden.

Eine weitere Ausführungsform der Berechnung eines neuen gemeinsamen Geheimnisses G ist die Nutzung eines Schlüssel-Austausch-Verfahrens, z.B. des Diffie-Hellman-Keyagreements. Vorteil dieser Ausführungsform ist, dass der Schlüsselaustausch zwischen Dienst-Computersystem und Sicherheitstoken durchgeführt werden kann, ohne dass das ID-Provider-Computersystems in den Besitz des Geheimnisses G kommt. Um einen Man-in-the-Middle-Angriff durch das ID-Provider-Computersystem auszuschließen, können die neu berechneten zweiten Daten mit einem weiteren Geheimnis authentisiert werden, das ausschließlich dem Sicherheitstoken und dem ID-Provider-Computersystem bekannt ist.

Bezugszeichenliste

| | |
|---|---|
| 100 | Nutzer-Computersystem |
| 102 | Nutzer |
| 104 | Schnittstelle |
| 106 | Sicherheitstoken |
| 108 | Schnittstelle |
| 110 | Prozessor |
| 112 | Programminstruktionen |
| 114 | Netzwerk-Schnittstelle |
| 116 | Netzwerk |
| 118 | elektronischer Speicher |
| 128 | Prozessor |
| 136 | ID-Provider-Computersystem |
| 138 | Netzwerk-Schnittstelle |
| 140 | Speicher |
| 142 | privater Schlüssel |
| 144 | Zertifikat |
| 145 | Prozessor |
| 146 | Programminstruktionen |
| 148 | Programminstruktionen |
| 150 | Dienst-Computersystem |
| 152 | Netzwerk-Schnittstelle |
| 154 | Prozessor |
| 156 | Programminstruktionen |
| 160 | erste Daten |
| 162 | zweite Daten |
| 164 | Schnittstelle |
| 166 | Programminstruktionen |
| 168 | Programminstruktionen |
| 170 | Display |

| 172 | Terminal |
| 174 | Schnittstelle |
| 176 | Prozessor |
| 178 | Anwendungsprogramm |
| 180 | Nutzerschnittstelle |
| 182 | Kommando-APDU |
| 184 | Authentisierungsmodul |
| 186 | Prozessor |
| 188 | Datenbank |
| 190 | Identifikator |
| 192 | Datenbanktabelle |
| 194 | Nutzerschnittstelle |

**Patentansprüche**

1. Verfahren zur Initialisierung von Datenbankmitteln eines Dienst-Computersystems, wobei das Dienst-Computersystem Mittel (154, 156) zur Erbringung eines Dienstes, für welchen eine Authentisierung erforderlich ist, Authentisierungsmittel (184), Mittel (152) zur Herstellung einer Netzwerkverbindung über ein Netzwerk (116) mit einem Nutzer-Computersystem (194), welche zur Übertragung eines Identifikators und eines OTP von dem Nutzer-Computersystem an das Dienst-Computersystem ausgebildet sind, aufweist, und wobei die Datenbankmittel (188) zur Speicherung einer Version von veränderlichen ersten und zweiten Daten mit dem Identifikator als Zugriffsschlüssel ausgebildet sind, wobei die Authentisierungsmittel Mittel (168, 186) zur kryptografischen Ableitung eines weiteren OTP mithilfe der aus den Datenbankmitteln ausgelesenen Version der ersten und zweiten Daten aufweist, und die Authentisierungsmittel dazu ausgebildet sind, das über die Netzwerkverbindung empfangene OTP mit dem weiteren OTP auf Übereinstimmung zu prüfen, und ein Authentisierungssignal zu erzeugen, wenn eine solche Übereinstimmung vorliegt, sowie zur Ermittlung von aktualisierten ersten Daten mithilfe einer Funktion (166, 186) sowie der Speicherung der aktualisierten ersten Daten in den Datenbankmitteln, wenn eine Übereinstimmung des OTP und des weiteren OTP vorliegt, wobei die ersten Daten zur Initialisierung der Datenbankmittel durch ein ID-Provider-Computersystem (136) aus einem Sicherheitstoken (106) ausgelesen werden, wobei zur Initialisierung der Datenbankmittel die folgenden Schritten durchgeführt werden:

   - Authentifizierung des Nutzers (102) gegenüber dem Sicherheitstoken,
   - Authentifizierung des ID-Provider-Computersystems (136) gegenüber dem Sicherheitstoken über das Netzwerk,
   - nach erfolgreicher Authentifizierung des Nutzers und des ID-Provider-Computersystems (136) gegenüber dem Sicherheitstoken, Durchführung eines Lesezugriffs des ID-Provider-Computersystems auf den in dem Sicherheitstoken gespeicherten Identifikator sowie die im ID-Token gespeicherten ersten Daten, Signierung des Identifikators und der ersten Daten durch das ID-Provider-Computersystem und Übertragung des signierten Identifikators und der signierten ersten Daten von dem ID-Provider-Computersystem an das Dienst-Computersystem über das Netzwerk, Prüfung der Signatur des Identifikators und der ersten Daten durch das Dienst-Computersystem und Speicherung der ersten Daten als aktuelle erste Daten in den Datenbankmitteln mit dem Identifikator als Zugriffsschlüssel.

2. Verfahren nach Anspruch 1, wobei die Authentifizierung des ID-Provider-Computersystems gegenüber dem Sicherheitstoken mit Hilfe eines Zertifikats (144) des ID-Provider-Computersystems erfolgt, wobei das Zertifikat eine Angabe einer Berechtigung des ID-Provider-Computersystems für den Lesezugriff beinhaltet, und wobei der Sicherheitstoken die Berechtigung des ID-Provider-Computersystems für den Lesezugriff mit Hilfe des Zertifikats überprüft.

3. Verfahren nach Anspruch 1 oder 2, wobei die Authentifizierung des ID-Provider-Computersystems und der Lesezugriff über ein mobiles Telekommunikationsgerät (172), inbesondere ein Smartphone, des Nutzers (102) erfolgen.

4. Verfahren nach Anspruch 1, 2 oder 3, wobei der Sicherheitstoken einen elektronischen Speicher (118) aufweist, auf den nur ein Prozessor (128) des Sicherheitstokens einen Speicherzugriff durchführen kann, wobei in dem elektronischen Speicher erste (160) und zweite (162) Daten gespeichert sind, wobei nach der Initialisierung der Datenbankmittel zur Authentisierung gegenüber einem Authentisierungsmodul (184) die folgenden Schritte durchgeführt werden:

- Einkopplung von elektrischer Energie zur Energieversorgung des Sicherheitstokens durch ein Terminal (172),
- Senden eines Kommandos (182) zur Erzeugung des OTP von dem Terminal an den Sicherheitstoken,
- kryptografische Ableitung (168) des OTP aus den ersten und zweiten Daten, die in dem elektronischen Speicher gespeichert sind, durch den Sicherheitstoken,
- Anzeige des OTP auf einer Anzeigevorrichtung (170) des Sicherheitstokens,
- Ermittlung von aktualisierten ersten Daten mithilfe einer Funktion (166) durch den Sicherheitstoken,
- Ersetzung der ersten Daten durch die aktualisierten ersten Daten in dem elektronischen Speicher durch den Sicherheitstoken, wobei die zweiten Daten unverändert bleiben,
- Herstellung einer Netzwerkverbindung zwischen einem Nutzer-Computersystem (100) und dem Authentisierungsmodul,
- Eingabe des OTP in das Nutzer-Computersystem,
- Übertragung eines Identifikators und des OTP von dem Nutzer-Computersystem über die Netzwerkverbindung an den Authentisierungsmodul,
- Zugriff des Authentisierungsmoduls auf die Datenbankmittel (188) mit dem Identifikator als Zugriffsschlüssel zum Auslesen der in den Datenbankmitteln gespeicherten Version der ersten und zweiten Daten,
- kryptografische Ableitung (168, 186) eines weiteren OTP durch das Authentisierungsmodul mit der aus den Datenbankmitteln ausgelesenen Version der ersten und zweiten Daten,
- Prüfung durch das Authentisierungsmodul, ob das OTP und das weitere OTP übereinstimmen, und wenn dies der Fall ist, Erzeugung eines Authentisierungssignals, Ermittlung von aktualisierten ersten Daten mithilfe der Funktion durch den Authentisierungsmodul, Speicherung der aktualisierten ersten Daten in den Datenbankmitteln als die aktuelle Version der ersten Daten, unter der Voraussetzung, dass das OTP und das weitere OTP übereinstimmen.

5. Verfahren nach Anspruch 4, wobei die kryptografische Ableitung des OTP durch den Sicherheitstoken und durch den Authentisierungsmodul jeweils nach Ermittlung der aktualisierten ersten Daten mithilfe der Funktion erfolgt, so dass die kryptografische Ableitung aus den ersten und zweiten Daten oder den aktualisierten ersten Daten und den zweiten Daten erfolgt, und/oder wobei die Anzeige des OTP auf der Anzeigevorrichtung des Sicherheitstokens vor oder nach der Aktualisierung der ersten Daten durch den Sicherheitstoken erfolgt.

6. Verfahren nach Anspruch 4 oder 5, wobei die Einkopplung der elektrischen Energie kontaktlos erfolgt, insbesondere durch elektromagnetische Kopplung, insbesondere nach einem NFC- oder RFID-Verfahren.

7. Verfahren nach Anspruch 4, 5 oder 6, wobei die kryptografische Ableitung des OTP durch eine Keyed Hash-Funktion erfolgt, wobei die zweiten Daten als geheimer Schlüssel verwendet werden.

8. Verfahren nach einem der vorhergehenden Ansprüche, wobei von dem Authentisierungsmodul die folgenden weiteren Schritte durchgeführt werden, wenn keine Übereinstimmung des OTP und des weiteren OTP festgestellt wird:

- Übermittlung von aktualisierten ersten Daten mithilfe der Funktion durch das Authentisierungsmodul,
- nochmalige kryptografische Ableitung des weiteren OTP durch den Authentisierungsmodul mit den zweiten Daten und den aktualisierten ersten Daten,
- nochmalige Überprüfung, ob eine Übereinstimmung zwischen dem über die Netzwerkverbindung empfangenen OTP und dem weiteren OTP vorliegt, und wenn dies nicht der Fall ist, wiederholte Durchführung der oben genannten Schritte bis eine Übereinstimmung vorliegt oder eine Abbruchbedingung erreicht ist,
- wenn die Abbruchbedingung erreicht ist, erneute Durchführung der Initialisierung der Datenbankmittel des Dienst-Computersystems.

9. Verfahren nach einem der vorhergehenden Ansprüche, wobei durch den Sicherheitstoken und/oder das ID-Provider-Computersystem aufgrund des Lesezugriffs aktuelle erste Daten erzeugt werden, und die aktuellen ersten Daten von dem ID-Provider-Computersystem an das Dienst-Computersystem übertragen werden.

10. Verfahren nach Anspruch 9, wobei durch den Sicherheitstoken eine erste Zufallszahl und durch das ID-Provider-Computersystem eine zweite Zufallszahl erzeugt werden, die ersten und zweiten Zufallszahlen über eine zwischen dem Sicherheitstoken und dem ID-Provider-Computersystem aufgebaute Verbindung (196; 199) ausgetauscht werden, die ersten und zweiten Zufallszahlen jeweils durch den Sicherheitstoken und das ID-Provider-Computersystem kombiniert werden, insbesondere konkateniert werden, und das ein Hashwert aus der Kombination der ersten und zweiten Zufallszahlen jeweils durch den Sicherheitstoken und das ID-Provider-Computersystem erzeugt wird, wobei der Hashwert die aktuellen ersten Daten ergibt, die durch den Sicherheitstoken (106) in dessen Speicher (118) als erste Daten (160) gespeichert werden und von dem ID-Provider-Computersystem signiert und über das Netzwerk (116) verschlüsselt an das Dienst-Computersystem (150) übertragen werden, sodass das Dienst-Computersystem mithilfe der aktuellen ersten Daten die Datenbankmittel initialisiert.

11. Computersystem mit einem Dienst-Computersystem (150), einem ID-Provider-Computersystem (136), einem Nutzer-Computersystem (100), einem Terminal (172) und einem Sicherheitstoken (106), wobei der Sicherheitstoken zur Erzeugung eines OTP ausgebildet ist, mit

    - Mitteln (164) zur Einkopplung von elektrischer Energie zur Energieversorgung des Sicherheitstokens durch einen Terminal (172),
    - Mitteln (164) zum Empfangen eines Kommandos (182) zur Erzeugung des OTP von dem Terminal,
    - Mitteln (168) zur kryptografischen Ableitung des OTP mithilfe von in einem elektronischen Speicher des Sicherheitstokens gespeicherten ersten (160) und zweiten (162) Daten,
    - Mitteln (128) zur Anzeige des OTP auf einer Anzeigevorrichtung (170) des Sicherheitstokens,
    - Mitteln (128, 166) zur Ermittlung von aktualisierten ersten Daten mithilfe einer Funktion, und
    - Mitteln (128) zur Ersetzung der ersten Daten durch die aktualisierten ersten Daten in dem elektronischen Speicher des Sicherheitstokens,

und wobei das Computersystem zur Durchführung eines Verfahrens nach einem der Ansprüche 1 bis 10 ausgebildet ist.

12. Computersystem nach Anspruch 11, wobei der Sicherheitstoken eine kontaktlose Schnittstelle (164), insbesondere eine NFC- und/oder RFID-Schnittstelle aufweist, welche zur Kommunikation mit dem Terminal und zur Einkopplung der elektrischen Energie durch das Terminal dient, wobei der Sicherheitstoken über keine eigene Energieversorgung verfügt und das Terminal durch ein Smartphone mit NFC- und/oder RFID-Schnittstelle gebildet wird.

13. Computersystem nach Anspruch 11 oder 12, wobei der Sicherheitstoken einen Zähler oder einen deterministischen Zufallszahlengenerator für die Ermittlung der aktualisierten ersten Daten aufweist.

14. Computersystem nach einem der Ansprüche 11, 12 oder 13, wobei die Mittel zur kryptografischen Ableitung des OTP eine Keyed-Hash-Funktion aufweisen, bei der die zweiten Daten als geheimer Schlüssel verwendet werden.

**Claims**

1. A method for initialising database means of a service computer system, wherein the service computer system has means (154, 156) for providing a service for which an authentication is necessary, authentication means (184), and means (152) for establishing a network connection via a network (116) to a user computer system (194), which are configured for the transfer of an identifier and an OTP from the user computer system to the service computer system, and wherein the database means (188) are configured for the storage of a version of variable first and second data with the identifier as access key, wherein the authentication means has means (168, 186) for the cryptographic derivation of a further OTP with the aid of the version of the first and second data read out from the database means, and the authentication means are configured to check for a match between the OTP received via the network connection and the further OTP and to generate an authentication signal if such a match exists, and to determine updated first data with the aid of a function (166, 186) and to store the updated first data in the database means if a match exists between the OTP and the further OTP, wherein the first data for initialisation of the database means are read out from a security token (106) by an ID provider computer system (136), wherein the following steps are performed for initialisation of the database means:

    - authenticating the user (102) to the security token,
    - authenticating the ID provider computer system (136) to the security token via the network,
    - following successful authentication of the user and of the ID provider computer system (136) to the security token, granting the ID provider computer system read access to the identifier stored in the security token and also the first data stored in the ID token, signing the identifier and the first data by the ID provider computer system, and transferring the signed identifier and the signed first data from the ID provider computer system to the service computer system via the network, checking the signature of the identifier and of the first data by the service computer system, and storing the first data as current first data in the database means with the identifier as access key.

2. The method according to claim 1, wherein the ID provider computer system is authenticated to the security token with the aid of a certificate (144) of the ID provider computer system, wherein the certificate includes a specification of an authorisation of the ID provider computer system for the read access, and wherein the security token checks the authorisation of the ID provider computer system for the read access with the aid of the certificate.

3. The method according to claim 1 or 2, wherein the authentication of the ID provider computer system and the read access are performed via a mobile telecommunications device (172), in particular a smartphone, of the user (102).

4. The method according to claim 1, 2 or 3, wherein the security token has an electronic memory (118), which memory can be accessed only by means of a processor (128) of the security token, wherein first data (160) and second data (162) are stored in the electronic memory, wherein the following steps are performed after the initialisation of the database means for authentication to an authentication module (184):

   - coupling in electrical energy in order to supply power to the security token by means of a terminal (172),
   - sending a command (182) to generate the OTP from the terminal to the security token,
   - cryptographically deriving (168) the OTP from the first and second data, which are stored in the electronic memory, by means of the security token,
   - displaying the OTP on a display device (170) of the security token,
   - determining updated first data with the aid of a function (166) by means of the security token,
   - replacing the first data by the updated first data in the electronic memory by means of the security token, wherein the second data remain unchanged,
   - producing a network connection between a user computer system (100) and the authentication module,
   - inputting the OTP into the user computer system,
   - transferring an identifier and the OTP from the user computer system via the network connection to the authentication module,
   - granting the authentication module access to the database means (188) with the identifier as access key in order to read out the version of the first and second data stored in the database means,
   - cryptographically deriving (168, 186) a further OTP by means of the authentication module with the version of the first and second data read out from the database means,
   - checking, by means of the authentication module, whether the OTP and the further OTP match, and, if so, generating an authentication signal, determining updated first data with the aid of the function by means of the authentication module, and storing the updated first data in the database means as the current version of the first data on the condition that the OTP and the further OTP match.

5. The method according to claim 4, wherein the cryptographic derivation of the OTP by means of the security token and by means of the authentication module is performed in each case after determination of the updated first data with the aid of the function, such that the cryptographic derivation is performed on the basis of the first and second data or the updated first data and the second data, and/or wherein the display of the OTP on the display device of the security token is provided before or after the updating of the first data by means of the security token.

6. The method according to claim 4 or 5, wherein the electrical energy is coupled in contactlessly, in particular by electromagnetic coupling, in particular in accordance with an NFC or RFID method.

7. The method according to claim 4, 5 or 6, wherein the cryptographic derivation of the OTP is performed by means of a keyed-hash function, wherein the second data are used as secret key.

8. The method according to any one of the preceding claims, wherein the following further steps are carried out by the authentication module if there is no match determined between the OTP and the further OTP:

   - transmitting updated first data with the aid of the function by means of the authentication module,
   - again cryptographically deriving the further OTP by means of the authentication module with the second data and the updated first data,
   - again checking whether there is a match between the OTP received via the network connection and the further OTP, and, if this is not the case, repeatedly executing the above-mentioned steps until there is a match or until a termination condition is reached,
   - if the termination condition is reached, again executing the initialisation of the database means of the service computer system.

9. The method according to any one of the preceding claims, wherein current first data are generated by the security token and/or the ID provider computer system on the basis of the read access, and the current first data are transferred from the ID provider computer system to the service computer system.

10. The method according to claim 9, wherein a first random number is generated by the security token and a second random number is generated by the ID provider computer system, the first and second random numbers are exchanged via a connection (196; 199) established between the security token and the ID provider computer system, the first and second random numbers are each combined by the security token and the ID provider computer system, in particular are concatenated, and a hash value from the combination of the first and second random numbers is generated by the security token and the ID provider computer system, wherein the hash value gives the current first data which are stored by the security token (106) in the memory (118) thereof as first data (160) and are signed by the ID provider computer system and are transmitted in encrypted form to the service computer system (150) via the network (116), such that the service computer system initialises the database means with the aid of the current first data.

11. A computer system comprising a service computer system (150), an ID provider computer system (136), a user computer system (100), a terminal (172), and a security token (106), wherein the security token is configured to generate an OTP, comprising

- means (164) for coupling in electrical energy for supplying power to the security token by means of a terminal (172),
- means (164) for receiving a command (182) to generate the OTP from the terminal,
- means (168) for cryptographically deriving the OTP with the aid of first data (160) and second data (162) stored in an electronic memory of the security token,
- means (128) for displaying the OTP on a display device (170) of the security token,
- means (128, 166) for determining updated first data with the aid of a function, and
- means (128) for replacing the first data by the updated first data in the electronic memory of the security token,

and wherein the computer system is configured to carry out a method according to any one of claims 1 to 10.

12. The computer system according to claim 11, wherein the security token has a contactless interface (164), in particular an NFC and/or RFID interface, which serves to communicate with the terminal and to couple in the electrical energy by means of the terminal, wherein the security token does not have its own power supply and the terminal is formed by a smartphone with NFC and/or RFID interface.

13. The computer system according to claim 11 or 12, wherein the security token has a counter or a deterministic random number generator for determining the updated first data.

14. The computer system according to any one of claims 11, 12 or 13, wherein the means for cryptographically deriving the OTP have a keyed-hash function, in which the second data is used as secret key.

**Revendications**

1. Procédé d'initialisation de moyens de banque de données d'un système informatique de services, où le moyen de système informatique de services (154, 156) présente, pour la fourniture d'un service pour lequel une authentification est nécessaire, des moyens d'authentification (184), des moyens (152) pour l'établissement d'une communication en réseau par l'intermédiaire d'un réseau (116) avec un système informatique d'utilisateur (194), lesquels sont conçus pour la transmission d'un identificateur et d'un mot de passe à usage unique du système informatique d'utilisateur vers le système informatique de services, et où les moyens de banque de données (188) sont conçus pour le stockage d'une version de premières et de deuxièmes données variables avec l'identificateur en tant que clé d'accès, où les moyens d'authentification présentent des moyens (168, 186) pour la déduction cryptographique d'un mot de passe à usage unique complémentaire à l'aide de la version lue à partir des moyens de banque de données des premières et deuxièmes données, et les moyens d'authentification sont conçus pour vérifier la concordance du mot de passe à usage unique reçu par l'intermédiaire de la communication par réseau avec le mot de passe à usage unique complémentaire, et générer un signal d'authentification lorsqu'il se produit une telle concordance, ainsi que pour la détermination de premières données actualisées à l'aide d'une fonction (166, 186), ainsi que le stockage des premières données actualisées dans les moyens de banque de données lorsqu'une concordance du mot de passe à usage unique et du mot de passe à usage unique complémentaire se produit, où les premières données sont lues par un système informatique de fournisseur d'identifiant (136) pour l'initialisation des moyens de banque de données à partir d'un jeton de sécurité (106), où, pour l'initialisation des moyens de banque de données, les étapes suivantes sont exécutées :

- authentification de l'utilisateur (102) par rapport au jeton de sécurité,
- authentification du système informatique de fournisseur d'identifiant (136) par rapport au jeton de sécurité par l'intermédiaire du réseau,
- après une authentification réussie de l'utilisateur et du système informatique de fournisseur d'identifiant (136) par rapport au jeton de sécurité, exécution d'un accès en lecture du système informatique de fournisseur d'identifiant sur l'identificateur stocké dans le jeton de sécurité ainsi que sur les première données stockées dans le jeton d'identité, signature de l'identificateur et des premières données par le système informatique de fournisseur d'identifiant et transmission de l'identificateur signé et des premières données signées du système informatique de fournisseur d'identifiant vers le système informatique de services par l'intermédiaire du réseau, vérification de la signature de l'identificateur et des premières données par le système informatique de services et stockage des premières données en tant que premières données actuelles dans les moyens de banque de données avec l'identificateur en tant que clé d'accès.

2. Procédé selon la revendication 1, dans lequel l'authentification du système informatique de fournisseur d'identifiant par rapport au jeton de sécurité s'effectue à l'aide d'un certificat (144) du système informatique de fournisseur d'identifiant, où le certificat contient une indication d'une autorisation à l'accès en lecture du système informatique de fournisseur d'identifiant, et où le jeton de sécurité vérifie l'autorisation pour l'accès en lecture du système informatique de fournisseur d'identifiant à l'aide du certificat.

3. Procédé selon la revendication 1 ou 2, dans lequel l'authentification du système informatique de fournisseur d'identifiant et l'accès en lecture s'effectuent par l'intermédiaire d'un appareil de télécommunication (172), notamment un Smartphone, de l'utilisateur (102).

4. Procédé selon les revendications 1, 2 ou 3, dans lequel le jeton de sécurité présente une mémoire (118) électronique sur laquelle uniquement un processeur (128) du jeton de sécurité peut exercer un accès en mémoire, où des premières (160) et des deuxièmes (162) données sont stockées dans la mémoire électronique, où, après l'initialisation des moyens de banque de données, les étapes suivantes sont effectuées pour l'authentification par rapport à un module d'authentification (184) :

- raccordement d'énergie électrique pour l'alimentation en énergie du jeton de sécurité par un terminal (172),
- envoi d'un ordre (182) pour la génération du mot de passe à usage unique du terminal vers le jeton de sécurité,
- déduction cryptographique (168) du mot de passe à usage unique à partir des premières et deuxièmes données qui sont stockées dans la mémoire électronique par le jeton de sécurité,
- indication du mot de passe à usage unique sur un dispositif d'affichage (170) du jeton de sécurité,
- détermination de premières données actualisées à l'aide d'une fonction (166) par le jeton de sécurité,
- remplacement des premières données par les premières données actualisées dans la mémoire électronique par le jeton de sécurité, les deuxièmes données restant inchangées,
- établissement d'une communication par réseau entre le système informatique d'utilisateur (100) et le module d'authentification,
- entrée du mot de passe à usage unique dans le système informatique d'utilisateur,
- transmission d'un identificateur et du mot de passe à usage unique du système informatique d'utilisateur vers le module d'authentification par l'intermédiaire de la communication par réseau,
- accès du module d'authentification aux moyens de banque de données (188) avec l'identificateur en tant que clé d'accès pour la lecture de la version des premières et deuxièmes données stockée dans les moyens de banque de données,
- déduction cryptographique (168, 186) d'un mot de passe à usage unique complémentaire par le module d'authentification avec la version des premières et deuxièmes données lue à partir des moyens de banque de données,
- vérification, par le module d'authentification, si le mot de passe à usage unique et le mot de passe à usage unique complémentaire concordent, et si c'est le cas, génération d'un signal d'authentification, détermination de premières données actualisées à l'aide de la fonction par le module d'authentification, stockage des premières données actualisées dans les moyens de banque de données en tant que version des premières données actuelles, à condition que le mot de passe à usage unique et le mot de passe à usage unique complémentaire concordent.

**5.** Procédé selon la revendication 4, dans lequel la déduction cryptographique du mot de passe à usage unique par le jeton de sécurité et par le module d'authentification s'effectue respectivement après la détermination des premières données actualisées à l'aide de la fonction, de sorte que la déduction cryptographique s'effectue à partir des premières et deuxièmes données ou des premières données actualisées et des deuxièmes données, et/ou où l'indication du mot de passe à usage unique s'effectue sur le dispositif d'affichage du jeton de sécurité avant ou après l'actualisation des premières données par le jeton de sécurité.

**6.** Procédé selon la revendication 4 ou 5, dans lequel le raccordement de l'énergie électrique s'effectue sans contact, en particulier par un couplage électromagnétique selon un procédé de communication en champ proche NFC ou de radio-identification RFID.

**7.** Procédé selon les revendications 4, 5 ou 6, dans lequel la déduction cryptographique du mot de passe à usage unique s'effectue par une fonction de hachage par clé, où les deuxièmes données sont employées en tant que clé secrète.

**8.** Procédé selon l'une des revendications précédentes, où les autres étapes suivantes sont exécutées par le module d'authentification, lorsqu'aucune concordance du mot de passe à usage unique et du mot de passe à usage unique complémentaire n'est constatée :

- transmission de premières données actualisées à l'aide de la fonction par le module d'authentification,
- renouvellement de la déduction cryptographique du mot de passe à usage unique complémentaire par le module d'authentification avec les deuxièmes données et les premières données actualisées,
- renouvellement de la vérification si la concordance entre le mot de passe à usage unique reçu par la communication par réseau et du mot de passe à usage unique complémentaire est présente, et si ce n'est pas le cas, vérification renouvelée des étapes citées ci-dessus jusqu'à ce qu'il y ait une concordance ou qu'une condition d'interruption soit atteinte,
- lorsque la condition d'interruption est atteinte, renouvellement de la réalisation de l'initialisation des moyens de banque de donnés du système informatique de services.

**9.** Procédé selon l'une des revendications précédentes, dans lequel de nouvelles premières données actuelles sont générées par le jeton de sécurité et/ou le système informatique de fournisseur d'identifiant en raison de l'accès en lecture, et les premières données actuelles sont transmises du système informatique de fournisseur d'identifiant vers le système informatique de services.

**10.** Procédé selon la revendication 9, dans lequel un premier nombre aléatoire est généré par le jeton de sécurité et un deuxième nombre aléatoire est généré par le système informatique de fournisseur d'identifiant, les premier et deuxième nombres aléatoires sont échangés par l'intermédiaire d'une liaison (196 ; 199) établie entre le jeton de sécurité et le système informatique de fournisseur d'identifiant, les premier et deuxième nombres aléatoires sont respectivement combinés par le jeton de sécurité et le système informatique de fournisseur d(identifiant, notamment soumis à une concaténation, et une valeur de hachage est générée à partir de la combinaison des premier et deuxième nombres aléatoires respectivement par le jeton de sécurité et le système informatique de fournisseur d'identifiant, où la valeur de hachage donne lieu aux premières données actuelles qui sont stockées par le jeton de sécurité (106) dans sa mémoire (116) en tant que premières donnés (160) et sont signées par le système informatique de fournisseur d'identifiant et sont transmises codées au système informatique de services (150) par l'intermédiaire du réseau (116), de sorte que le système informatique de services initialise les moyens de banque de données à l'aide des premières données actuelles.

**11.** Système informatique avec un système informatique de services (150), un système informatique de fournisseur d'identifiant (136), un système informatique d'utilisateur (100), un terminal (172) et un jeton de sécurité (106), où le jeton de sécurité est conçu pour la génération d'un mot de passe à usage unique, avec

- des moyens (164) pour le raccordement d'énergie électrique pour l'alimentation en énergie du jeton de sécurité par un terminal (172),
- des moyens (164) pour la réception d'un ordre (182) pour la génération du mot de passe à usage unique par le terminal,
- des moyens (168) pour la déduction cryptographique du mot de passe à usage unique à l'aide de premières (160) et deuxièmes (162) données stockées dans une mémoire électronique du jeton de sécurité,
- des moyens (128) pour l'indication du mot de passe à usage unique sur un dispositif d'affichage (170) du jeton de sécurité,
- des moyens (128, 166) pour la détermination de premières données actualisées à l'aide d'une fonction, et
- des moyens (128) pour le remplacement des premières données par les premières données actualisées dans la mémoire électronique du jeton de sécurité,

et où le système informatique est conçu pour l'exécution d'un procédé selon l'une des revendications 1 à 10.

12. Système informatique selon la revendication 11, dans lequel le jeton de sécurité présente une interface (164) sans contact, en particulier, une interface de communication par champ proche NFC et/ou de radio-identification RFID, laquelle sert à la communication avec le terminal et pour le raccordement de l'énergie électrique par le terminal, où le jeton de sécurité ne dispose d'aucune alimentation en énergie propre et le terminal est formé par un Smartphone avec une interface de communication par champ proche NFC et/ou de radio-identification RFID.

13. Système informatique selon la revendication 11 ou 12, dans lequel le jeton de sécurité présente un compteur ou un système de génération de nombres aléatoires de manière déterministe pour la détermination des premières données actualisées.

14. Système informatique selon l'une des revendications 11, 12 ou 13, dans lequel les moyens pour la déduction cryptographique du mot de passe à usage unique présentent une fonction de hachage par clé chez laquelle les deuxièmes données sont employées en tant que clé secrète.

Fig. 1

| Initialisierung | ~ 8 |

↓

| Einkopplung von Energie | ~ 10 |

↓

| Sendung von Kommando APDU zur Anforderung OTP durch Terminal | ~ 12 |

↓

| Kryptographische Ableitung des OTP mit Hilfe von Z und G | ~ 14 |

↓

| Aktualisierung von Z | ~ 16 |

↓

| Anzeige von OTP | ~ 18 |

**40**

| Anforderung |

↓

| Übertragung von Identifikator und OTP an Authentisierungsserver | ~ 20 |

↓

| Lesen von Z und G mit Identifikator als Zugriffschlüssel | ~ 22 |

↓

| Kryptographische Ableitung des OTP mit Hilfe von Z und G | ~ 24 |

↓

| Fehlersignal | ← nein — ◇ OTPs gleich ? ~ 26

**38**

↓ ja

| Aktualisierung von Z | ~ 28 |

↓

| Speicherung des aktualisierten Z | ~ 30 |

↓

| Authentisierungssignal | ~ 32 |

**Fig. 2**

25

8 — Initialisierung

10 — Einkopplung von Energie

12 — Sendung von Kommando APDU zur Anforderung OTP durch Terminal

14 — Kryptographische Ableitung des OTP mit Hilfe von Z und G

16 — Aktualisierung von Z

18 — Anzeige von OTP

40 — Anforderung

20 — Übertragung von Identifikator und OTP an Authentisierungsserver

22 — Lesen von Z und G mit Identifikator als Zugriffschlüssel

Aktualisierung von Z

36 — Kryptographische Ableitung des OTP mit Hilfe von Z und G

24
28

nein

Abbruch-bedingung ?    nein    OTPs gleich ?    26

34

ja                              ja

38 — Fehlersignal

Aktualisierung von Z

30 — Speicherung des aktualisierten Z

32 — Authentisierungssignal

**Fig. 3**

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012201209

**In der Beschreibung aufgeführte Nicht-Patentliteratur**

- **S. BAKHTIARI et al.** Center for Computer Security Research, Department of Computer Science. University of Wollongong